(19) **Europäisches Patentamt European Patent Office Office européen des brevets**

(11) **EP 3 005 047 B1**

(12) **EUROPEAN PATENT SPECIFICATION**

(45) Date of publication and mention of the grant of the patent:
**31.10.2018   Bulletin 2018/44**

(21) Application number: **14804520.6**

(22) Date of filing: **30.05.2014**

(51) Int Cl.:
*B62D 1/04* (2006.01)      *B62D 1/06* (2006.01)
*G06F 3/042* (2006.01)      *G06F 3/02* (2006.01)
*G06F 3/0488* (2013.01)

(86) International application number:
**PCT/US2014/040112**

(87) International publication number:
**WO 2014/194151 (04.12.2014 Gazette 2014/49)**

(54) **OPTICAL PROXIMITY SENSORS**

OPTISCHE NÄHERUNGSSENSOREN

CAPTEURS DE PROXIMITÉ OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2013   US 201361828713 P**
**23.06.2013   US 201361838296 P**
**15.07.2013   US 201361846089 P**
**26.12.2013   US 201314140635**
**22.01.2014   US 201461929992 P**
**31.03.2014   US 201461972435 P**
**30.04.2014   US 201461986341 P**

(43) Date of publication of application:
**13.04.2016   Bulletin 2016/15**

(73) Proprietor: **Neonode Inc.**
**San Jose CA 95134 (US)**

(72) Inventors:
• **HOLMGREN, Stefan**
  **Sollentuna 192 72 (SE)**
• **IYER, Sairam**
  **San Jose, CA 95134 (US)**
• **BERGLIND, Richard**
  **Älvsjö 125 58 (SE)**
• **NORDSTROM, Karl Erik, Patrik**
  **Huddinge 141 41 (SE)**
• **SPARF, Lars**
  **Vällingby 162 45 (SE)**
• **ROSENGREN, Per**
  **187 73 Täby (SE)**

• **ROSENGREN, Erik**
  **Stockholm 114 23 (SE)**
• **KARLSSON, John**
  **Märsta 195 32 (SE)**
• **ERIKSSON, Thomas**
  **Stockholm 114 32 (SE)**
• **JUBNER, Alexander**
  **Stockholm 113 28 (SE)**
• **BEHDASHT, Remo**
  **7339 EZ Ugchelen (NL)**
• **FELLIN, Simon**
  **Sigtuna 193 31 (SE)**
• **AMAN, Robin, Kjell**
  **Spånga 163 41 (SE)**
• **SHAIN, Joseph**
  **Rehovot 76308 (IL)**

(74) Representative: **Lavoix**
**Bayerstrasse 83**
**80335 München (DE)**

(56) References cited:
WO-A1-2012/017183      WO-A2-2007/029257
US-A1- 2008 016 511     US-A1- 2008 278 460
US-A1- 2009 195 402     US-A1- 2009 280 905
US-A1- 2010 238 139     US-A1- 2010 238 139
US-A1- 2011 122 560     US-A1- 2011 169 781
US-A1- 2011 169 781     US-A1- 2011 248 960
US-A1- 2012 131 186     US-A1- 2012 188 205
US-A1- 2012 262 408     US-A1- 2012 327 029
US-A1- 2013 127 790     US-B1- 7 162 124

**Description**

CROSS REFERENCES TO RELATED APPLICATIONS

This application claims priority benefit from

- U.S. Provisional Patent Application No. 61/828,713, entitled OPTICAL TOUCH SCREEN SYSTEMS USING REFLECTED LIGHT, and filed on May 30, 2013 by inventors Per Rosengren, Lars Sparf, Erik Rosengren and Thomas Eriksson;
- U.S. Provisional Patent Application No. 61/838,296, entitled OPTICAL GAME ACCESSORIES USING REFLECTED LIGHT, and filed on June 23, 2013 by inventors Per Rosengren, Lars Sparf, Erik Rosengren, Thomas Eriksson, Joseph Shain, Stefan Holmgren, John Karlsson and Remo Behdasht;
- U.S. Provisional Patent Application No. 61/846,089, entitled PROXIMITY SENSOR FOR LAPTOP COMPUTER AND ASSOCIATED USER INTERFACE, and filed on July 15, 2013 by inventors Richard Berglind, Thomas Eriksson, Simon Fellin, Per Rosengren, Lars Sparf, Erik Rosengren, Joseph Shain, Stefan Holmgren, John Karlsson and Remo Behdasht;
- U.S. Provisional Patent Application No. 61/929,992, entitled CLOUD GAMING USER INTERFACE, and filed on January 22, 2014 by inventors Thomas Eriksson, Stefan Holmgren, John Karlsson, Remo Behdasht, Erik Rosengren, Lars Sparf and Alexander Jubner;
- U.S. Provisional Patent Application No. 61/972,435, entitled OPTICAL TOUCH SCREEN SYSTEMS, and filed on March 30, 2014 by inventors Sairam Iyer, Karl Erik Patrik Nordström, Per Rosengren, Stefan Holmgren, Erik Rosengren, Robert Pettersson, Lars Sparf and Thomas Eriksson;
- U.S. Provisional Patent Application No. 61/986,341, entitled OPTICAL TOUCH SCREEN SYSTEMS, and filed on April 30, 2014 by inventors Sairam Iyer, Karl Erik Patrik Nordström, Lars Sparf, Per Rosengren, Erik Rosengren, Thomas Eriksson, Alexander Jubner and Joseph Shain; and
- U.S. Patent Application No. 14/140,635, entitled LIGHT-BASED PROXIMITY DETECTION SYSTEM AND USER INTERFACE, and filed on December 26, 2013 by inventors Thomas Eriksson and Stefan Holmgren.

FIELD OF THE INVENTION

The field of the present invention is light-based touch screens.

BACKGROUND OF THE INVENTION

Many consumer electronic devices are now being built with touch sensitive screens, for use with finger or stylus touch user inputs. These devices range from small screen devices such as mobile phones and car entertainment systems, to mid-size screen devices such as notebook computers, to large screen devices such as check-in stations at airports.

The present invention relates to light-based touch screens. Prior art light-based touch screens surround the screen borders with light emitters and light detectors to create a light beam grid above the screen surface. An object touching the screen from above blocks a corresponding portion of the beams.

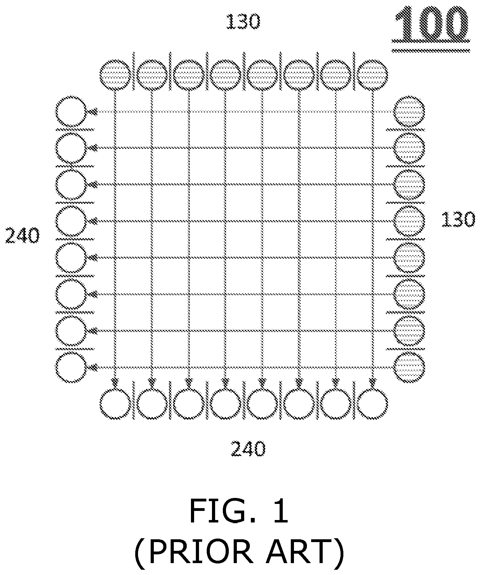

Reference is made to **FIG. 1,** which is a diagram of a prior art, light-based touch screen having 16 LEDs and 16 PDs. Screen **100** in **FIG. 1** is surrounded by emitters **130** along two edges and photodiode (PD) receivers **240** along the remaining two edges, which together enable a lattice of light beams covering the screen.

One drawback of prior art light-based touch screens is the need to accommodate the numerous light emitters and light detectors along all four edges of the screen. This requirement makes it difficult to insert light-based touch detection into an existing electronic device without significantly changing the layout of the device's internal components. It would be advantageous to reduce the number of components required and to enable placing them in a limited area rather than surrounding the entire screen. Reducing the total number of light emitters and light detectors required has the added benefit of reducing the bill-of-materials (BOM).

US 2010/238139 A1 discusses a touch screen system, including a screen, a plurality of light sources coupled with the screen, for emitting light, a plurality of photo diodes coupled with the screen, for detecting the light emitted by the light sources, and for identifying the location of a touch on the screen when an absence of the emitted light is detected. In another embodiment photo diodes are placed in an array perpendicular to the light sources array and the location of a touch is detected based on the determination of the light reflected by the touch.

US 2011/169781 A1 discusses how to determine the x-coordinate $X_p$ of a touch object location $(X_p, Y_p)$, using the weighted average

$$X_\mathrm{P} = (W_a X_a + W_b X_b)/(W_a + W_b),$$

In this equation, the weights $W_a$ and $W_b$ are normalized signal differences for detections of blocked light beams, namely, the difference between a baseline, or expected, light value when the beam is not blocked and the actual detected light value. Such difference indicates that an object is touching the screen, blocking a portion of the expected light. The coordinates $X_a$ and $X_b$ are x-coordinates that correspond to the blocked light beams. A similar weighted average is used to determine the y-coordinate $Y_P$.

US 2008/278460 A1 mentions that a substantially collimated planar light signal will often have some divergence in the vertical direction because the exit aperture defined by a redirection element will generally be quite large (in optical terms), of order 1 mm. Despite the fact that any vertical divergence will be slight, it is possible that a portion of a diverging signal could reflect off the top surface of a transmissive element and leak around a touch object, potentially causing problems with touch detection. This vertical divergence may be reduced for example by imposing an appropriate cylindrical curvature on the exit face or on the redirection element. Alternatively, the inclination of the redirection element may be altered such that a diverging signal does not reflect off the top surface of the transmissive element.

US 2012/327029 A1 discusses touch systems that include at least one light guide optically coupled to at least one light source and at least one optical detector. The light guide can be configured to transmit light from at least one light source across the surface in at least one direction and to receive at least a portion of the transmitted light reflected in an opposite direction in response to at least one reflecting object on the surface. The touch system can be configured to determine a location of at least one reflecting object on the surface by identifying a position of where the light guide receives the reflected light and by determining time-of-flight of the transmitted light and the reflected light.

US 2011/248960 A1 discusses embodiments of a holographic touchscreen and methods of configuring such devices. In certain embodiments, a touchscreen assembly can include a holographic layer configured to receive incident light and turn it into a selected direction to be transmitted through a light guide. The holographic layer can be configured to accept incident light within an acceptance range and so that the selected direction is within a range of directions so as to allow determination of incidence location based on detection of the turned light. A light source can be provided so that light from the source scatters from an object such as a fingertip near the holographic layer and becomes the incident light. The determined incidence location can represent presence of the fingertip at or near the incidence location, thereby providing touchscreen functionality.

WO 2007/029257 A2 discusses an integrated display and input device including a first pixel array operative to provide a visually sensible output, a second pixel array operative to sense at least a position of an object with respect to the first pixel array and circuitry receiving an output from the second pixel array and providing a non-imagewise input to utilization circuitry. In at least one embodiment, light emitters and sensors are placed in the same one dimensional array. One of the 2 dimensional coordinates is detected evaluating the position of the sensor receiving the reflected light and the other coordinate is evaluated on the strength of the detected reflected light.

SUMMARY

The invention is set out in the appended set of claims. The embodiments and/or examples of the following description which are not covered by the appended claims are considered as examples provided for understanding the invention. Embodiments of the present invention provide two-dimensional (2D) touch detection using a one-dimensional array of alternating light emitters and detectors. The present invention also provides a three-dimensional (3D) touch or hover detector based on the same principles as the 2D detectors.

There is thus provided in accordance with an embodiment of the present invention a row of alternating light emitters and detectors. The light emitters project collimated light beams perpendicular to the row and parallel to each other in sequence. The light detectors detect light from the emitters that has been reflected by an object inserted into the light beam path. Each detector detects light in the plane of the emitter beams, but at a fixed angle relative to those beams. The distance between an emitter and a detector that detects light reflected from the emitter's beam, together with the fixed angle, is used to determine the location of the reflecting object by triangulation.

There is further provided in accordance with an embodiment of the present invention a proximity sensor for determining two-dimensional coordinates of a proximal object according to claim 1.

BRIEF DESCRIPTION OF THE DRAWINGS

The present invention will be more fully understood and appreciated from the following detailed description, taken in conjunction with the drawings in which:

**FIG. 1** is a diagram of a prior art, light-based touch screen having 16 LEDs and 16 PDs;

**FIG. 2** is a simplified diagram of a proximity sensor for detecting two-dimensional coordinates of an object in a two-dimensional detection area, in accordance with an embodiment of the present invention;

**FIG. 3** is a simplified diagram of a touch screen system using the proximity sensor of **FIG. 2,** in accordance an embodiment of the present invention;

**FIGS. 4** and **5** are exploded views of an optical proximity sensor, in accordance with an embodiment of the present invention;

**FIG. 6** is a view from above of an optical proximity sensor, in accordance with an embodiment of the present invention;

**FIGS. 7 - 12** are simplified diagrams of emitted and reflected light beams used in an optical proximity sensor, in accordance with an embodiment of the present invention;

**FIG. 13** and **14** are illustrations of touch detection maps, in accordance with an embodiment of the present invention;

**FIG. 15** is a simplified illustration of a lens array with alternating emitters and detectors, in accordance with an embodiment of the present invention;

**FIGS. 16** - **18** are simplified touch detection maps used for illustrating the algorithms used to calculate a touch location using an optical proximity sensor, in accordance with an embodiment of the present invention;

**FIG. 19** illustrates an interpolation of detection signals, in accordance with an embodiment of the present invention;

**FIG. 20** illustrates a Hough transform, in accordance with an embodiment of the present invention;

**FIG. 21** is a detection map, in accordance with an embodiment of the present invention;

**FIGS. 22** and **23(a)** - **(f)** are simplified touch detection maps for various touch screen system embodiments, in accordance with the present invention;

**FIG. 24** and **25** are simplified illustrations of a dual-resolution sensor, in accordance with an embodiment of the present invention;

**FIGS. 26(a)** and **(b)** are simplified illustrations of two detection maps used in a dual-resolution sensor, in accordance with an embodiment of the present invention;

**FIG. 27** is a simplified view from above of LEDs and PDs on a PCB for a dual-resolution sensor, in accordance with an embodiment of the present invention;

**FIG. 28** is a simplified cross-section illustration of a dual-resolution sensor, in accordance with an embodiment of the present invention;

**FIG. 29** is a simplified illustration of a dual-display laptop, in accordance with an embodiment of the present invention;

**FIG. 30** is a simplified illustration of a portion of a dual-display laptop, in accordance with an embodiment of the present invention;

**FIG. 31** is a simplified illustration of a PC, in accordance with an embodiment of the present invention;

**FIG. 32** is a simplified illustration of the keyboard of the PC of **FIG. 31,** in accordance with an embodiment of the present invention;

**FIG. 33** is a simplified illustration of a PC trackpad, in accordance with an embodiment of the present invention;

**FIG. 34** is a simplified illustration of a transparent PC keyboard, in accordance with an embodiment of the present invention;

**FIG. 35** is a simplified side perspective view of the transparent keyboard of **FIG. 34,** in accordance with an embodiment of the present invention;

**FIG. 36** is a simplified illustration of a secondary display that provides keyboard and GUI functionality, in accordance with an embodiment of the present invention;

**FIG. 37** is a simplified illustration of a PC with proximity sensors for detecting wave gestures that approach a side edge of the display, in accordance with an embodiment of the present invention;

**FIGS. 38** - **41** are simplified illustrations of a game accessory, in accordance with an embodiment of the present invention;

**FIG. 42** is a simplified illustration of a 3-dimensional sensor using multiple optical proximity sensors, in accordance with an embodiment of the present invention;

**FIG. 43** is a simplified illustration of a handheld electronic game device having a communicator for communicating with an internet game server, in accordance with an embodiment of the present invention;

**FIG. 44** is a simplified illustration of an internet game rendered on a handset, in accordance with an embodiment of the present invention;

**FIG. 45** is a simplified illustration of two handsets being used together to render an internet game, in accordance with an embodiment of the present invention;

**FIG. 46** is a simplified illustration of a two-panel display for an internet game, the display being made up of two handsets, in accordance with an embodiment of the present invention;

**FIG. 47** is a simplified illustration of a four-panel display for an internet game, the display being made up of four handsets, in accordance with an embodiment of the present invention; and

**FIG. 48** is a simplified illustration of a configuration of the four game devices of **FIG. 47,** whereby the game GUI is distributed among the four displays according to each display's relative position and orientation, as detected by sensors and communicated to a game server, in accordance with an embodiment of the present invention.

The following tables catalog the numbered elements and list the figures in which each numbered element appears. Similarly numbered elements represent elements of the same type, but they need not be identical elements.

| Numbered Elements | | |
|---|---|---|
| Element | Description | Figures |
| 100 | screen | 1,28 |
| 101-103,111, 130 | emitters | 1 - 4, 6 - 12, 15, 25, 27, 38- 41 |
| 131 | primary display | 29, 31, 37 |
| 132 | secondary display | 29, 30 |
| 133 | keyboard | 31, 32 |
| 134 | track board | 31, 33 |
| 135 | keyboard | 34, 35 |
| 136,137 | GUI control | 36 |
| 142 -145 | display | 48 |
| 201 - 208, 210 - 215, 240 | photo-detectors | 1 - 4, 6 - 8, 10 -12, 15, 25, 27, 28, 38 - 41 |
| 301 | light guide | 3 |
| 302, 303 | lenses | 3 |
| 304 | light guide | 28 |
| 305 - 307 | reflective facets | 28 |
| 310 | light guide | 4,5 |
| 311 | lens | 4, 6, 8 -11 |
| 312 | lens array | 2, 15, 25 |
| 320, 321 | light barrier | 4-6 |
| 331 | bezel | 30 |
| 336, 401 | light beams | 3 |
| 402 | reflected light beam | 3 |
| 403 - 405 | light beams | 2, 15, 25 |
| 406 - 409 | reflected light beams | 2, 15 |
| 410 | light beams | 9-12 |
| 411 - 413 | reflected light beams | 2, 7, 10 -12 |
| 420 | light beam | 8 |
| 421 | reflected light beams | 8 |
| 501, 510, 511 | touch sensor bar | 4 - 6, 12, 24, 42 |
| 512 - 517 | proximity sensor | 2, 32, 33 |
| 518 | game device sensor | 43, 48 |
| 601, 602 | casing | 4,5 |
| 603 | PCB | 4, 5, 27, 28 |
| 701 | controller | 6 |
| 702 | processor | 2 |

(continued)

| Numbered Elements | | |
|---|---|---|
| **Element** | **Description** | **Figures** |
| **703** | communications processor | **43, 48** |
| **901** | object | **3** |
| **902 - 908** | position in detection plane | **2, 15, 19** |
| **910** | object | **7** |
| **911** | screen | **9, 42** |
| **912** | image plane | **8** |
| **913, 914** | point in image plane | **8** |
| **915** | angle | **8** |
| **916** | object plane | **8** |
| **917** | concentric shapes | **14** |
| **919** | area in detection map | **22** |
| **921, 922** | detection zone | **24** |
| **930** | location on detection map | **21** |
| **931** | area in detection map | **21** |
| **932** | line in detection map | **21** |
| **933** | elastic band | **38-41** |
| **934** | slingshot pad | **38-41** |
| **935** | extension | **39 - 41** |
| **939** | arrow | **46** |
| **950** | hinge | **42** |
| **952-954** | interpolated position and direction | **19, 20** |
| **955-958** | candidate ellipse | **20** |
| **976** | PCB | **38 - 41** |
| **983, 984** | communications processor | **45** |
| **991** | server | **43 - 45, 48** |
| **994 - 997** | handset / game console | **43 - 47** |
| **998, 999** | detection zone | **44 - 47** |

DETAILED DESCRIPTION

Aspects of the present invention relate to light-based touch screens and light-based touch surfaces. Throughout this specification, the term "touch screen" includes a touch surface that does not include an electronic display, inter alia, a mouse touchpad as included in many laptop computers and the back cover of a handheld device. It also includes an unenclosed airspace adjacent to the sensor provided by the present invention.

According to embodiments of the present invention, a light-based touch sensor includes a plurality of infra-red or near infra-red light-emitting diodes (LEDs) and a plurality of photodiodes (PDs) arranged along one edge of a detection plane. In some embodiments, the detection plane is the surface or interface area of a touch screen, as defined above. The LEDs project collimated light along the detection plane, and when this light is reflected by an inserted object, such as a finger or a stylus, the reflected light is detected by the PDs. The geometry of the locations of the activated LED and the PD that detects the reflected light, suffices to determine two-dimensional coordinates of the pointer within the detection area by triangulation. The LEDs and PDs are selectively activated by a processor. Generally, each LED and PD has I/O connectors, and signals are transmitted to specify which LEDs and which PDs are activated.

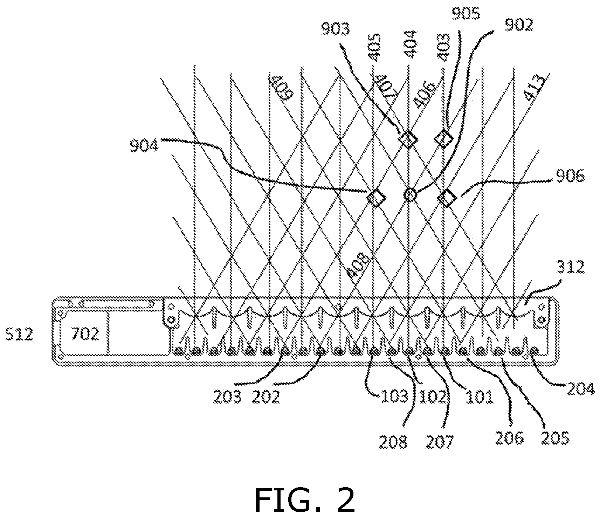

Reference is made to **FIG. 2,** which is a simplified diagram of a proximity sensor for detecting two-dimensional coordinates of an object in a two-dimensional detection area, in accordance with an embodiment of the present invention. **FIG. 2** shows proximity sensor **512** featuring a row of alternating emitters and detectors along the bottom edge, an array of lenses **312** along the upper edge and processor **702** at the left edge. Not all of the emitters and detectors are numbered in order to simplify the illustration. Thus, only emitters **101 - 103** and detectors **202 - 208** are numbered in **FIG. 2.** The alternating arrangement of emitters and detectors is illustrated by emitters **101 - 103** and detectors **206 - 208.**

Each emitter is situated on the optical axis of a respective collimating lens in array **312.** In **FIG. 2** emitters **101 - 103** are shown projecting respective light beams **403 - 405.**

**FIG. 2** also shows reflected light beams for each detector. Five of these are numbered **406 - 409** and **413.** Each lens in array **312** transmits reflected light to the two detectors neighboring the lens's emitter. For example, the lens opposite emitter **102** directs reflected beam **413** onto detector **208** and also directs reflected beam **409** onto detector **207.** As will be explained below, the detectors are positioned along the lens's object plane to receive maximum intensity from beams that enter the lens at a particular angle. This enables determining a location in the two-dimensional area corresponding to each emitter-detector pair. In **FIG. 2** these locations are the intersections between emitter beams and reflected beams. In **FIG. 2** five such locations are numbered **902 - 906.**

According to an embodiment of the present invention, each emitter is synchronously co-activated with each of the detectors by processor **702.** If reflected light is detected during a co-activation, it indicates that an object is located in the vicinity of the corresponding intersection location between the activated emitter beam and the corresponding reflected beam for the co-activated detector, as illustrated in **FIG. 2.** Processor **702** calculates the object's coordinates by determining an emitter-detector pair among the co-activated emitter-detector pairs, for which the detector detects a maximum amount of light, and identifying the position associated therewith. For example, the maximum detection is identified for the emitter-detector pair **102 - 202,** namely, when emitter beam **404** is reflected along beam **408.** The position corresponding to this detection is position **902** in the detection plane. Processor **702** determines additional positions that are associated with co-activated emitter-detector pairs and that neighbor the identified position of the maximum detection, e.g., emitter-detector pair **102 - 203** whose corresponding position is **903** and emitter-detector pair **101 - 202** whose corresponding position is **905.** Additional detections and their corresponding positions can also be used, e.g., detections corresponding to positions **904** and **906.** Processor **702** calculates a weighted average of the identified position of the maximum detection and the thus-determined additional positions, wherein each position's weight in the average corresponds to a degree of detection of the reflected light beam for the emitter-detector pair to which that position is associated.

Processor **702** is operable to synchronously co-activate one emitter with more than one detector simultaneously. In some embodiments, processor **702** calculates the object location using the Hough transform as described herein below.

Emitters such as LEDs and detectors such photo diodes (PDs) typically come mounted on individual substrates and encased in individual lens covers. In order to reduce the cost of proximity sensor **512,** in some embodiments the emitters and detectors are mounted as bare diodes on a PCB or other substrate in proximity sensor **512** without individual lenses and without individual substrates. The lens array **312** serves as the only lens for these diodes. In this case proximity sensor **512** can be viewed as a large, multi-diode component. This component can be pre-manufactured and inserted either by an ODM or by an end user into a device to provide touch detection.

For example, this component can be placed above or below a car window to enable the user to perform tap and gesture input on the car window. Processor **702** includes a communication processor e.g., BLUETOOTH® for communicating wirelessly with the car stereo or with a user's phone. BLUETOOTH is a trademark of Bluetooth SIG, Inc. Similarly, this component can be placed above or below a window in a house or on the wall in a house to enable the user to perform tap and gesture input on the window or wall. A transparent sheet with digits and icons can be placed on or in the window glass or on the wall to indicate what input operations the user's touches at each location activate.

In the description, proximity sensor **512** is also referred to as touch sensor bar **501** and touch sensor bar **510.**

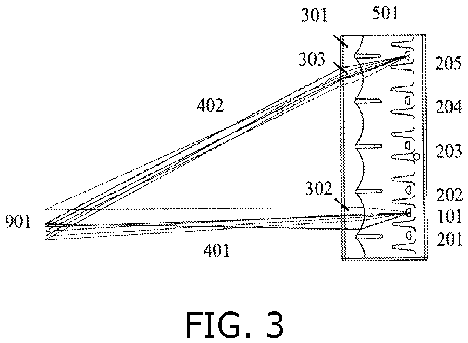

Reference is made to **FIG. 3,** which is a simplified diagram of a touch screen system using proximity sensor **512,** in accordance an embodiment of the present invention. **FIG. 3** shows a touch sensor bar **501** detecting light reflected by a remote object **901.** Touch sensor bar **501** includes five PDs, **201 - 205.** An LED is inserted between each pair of PDs. Thus, there are 4 LEDs in touch sensor bar **501.** However, only one of the LEDs, LED **101,** is numbered in **FIG. 3.**

Touch sensor bar **501** includes a light guide **301** in front of the LEDs and PDs, that performs two functions: first, it collimates light from the light emitting diodes and projects it across the screen surface, as illustrated by light beams **401;** second, it focuses reflected light **402** entering the light guide **301** at fixed angles, onto the photodiodes. Thus, light guide **301** includes a connected series of collimating lenses, of which lenses **302** and **303** are indicated in **FIG. 2B.** Lens **302** is shown collimating the emitter **101** beams, and lens **303** is shown focusing reflected light **402** entering the light guide **301** at a particular fixed angle onto photodiode **205.**

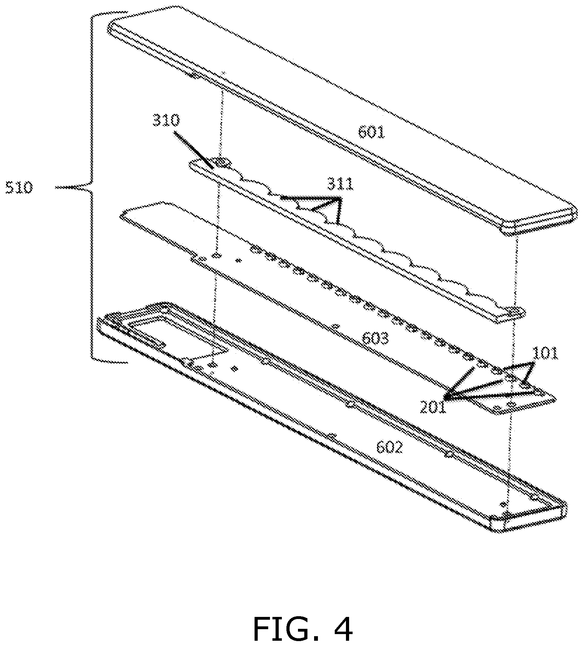

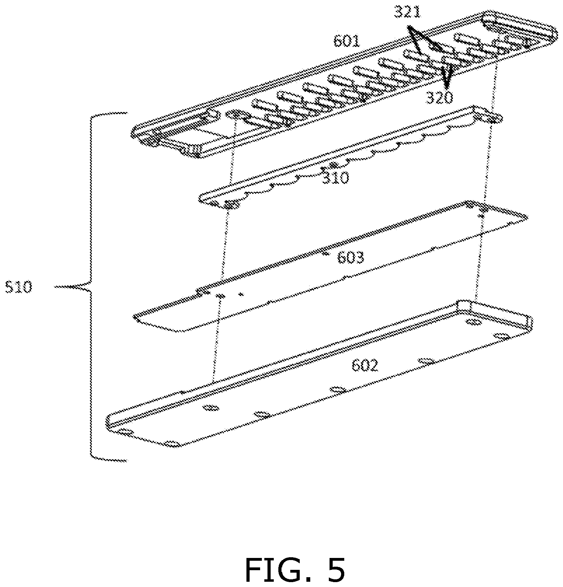

Reference is made to **FIGS. 4** and **5,** which are exploded views of a touch detection apparatus, in accordance with an embodiment of the present invention. **FIG. 4** shows an exploded view of touch sensor bar **510,** viewed from above. In between top and bottom casing parts **601** and **602,** a PCB **603** and light guide **310** are shown. PCB **603** has a row of alternating LEDs **101** and PDs **201,** whereby the outermost diodes at both ends of the row are PDs **201.** Thus, there are 11 PDs interleaved with 10 LEDs on PCB **603. FIG. 3** also shows light guide **310** being formed of 10 collimating lenses **311** -- one lens directly opposite each LED. As mentioned above, each collimating lens **311** performs two functions: collimating outgoing beams and focusing incoming reflected beams onto a PD. The LED is situated at the focus of its opposite lens. The lateral offset of each PD from this focal point ensures that the lens will only direct incoming beams within a narrow range of angles onto the PD. Incoming beams whose angle of incidence on lens **311** is greater or less than the narrow range of angles are focused away from the target PD.

In order to prevent stray LED light from saturating a neighboring PD, a series of light barriers **320** - **321** separates each LED from its neighboring PDs. **FIG. 5** shows another exploded view of touch sensor bar **510,** viewed from below. The light barriers **320** and **321** are shown protruding from the underside of top casing **601.**

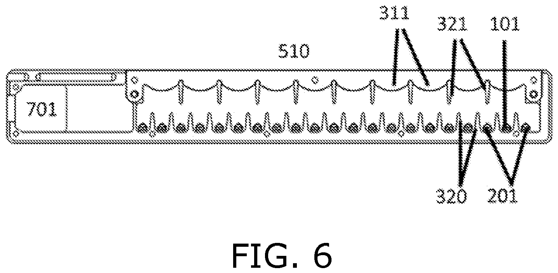

Reference is made to **FIG. 6,** which is a view from above of a touch detection apparatus, in accordance with an embodiment of the present invention. **FIG. 6** shows a view of touch sensor bar **510** from above. **FIG. 6** shows an alternating row of LEDs **101** and PDs **201,** each diode isolated by barriers **320** and **321;** lenses **311** opposite each LED **101** and a controller **701** for activating LEDs **101** and PDs **201** in a sequence and for receiving the PD detection signals. Touch calculations performed based on the PD detection signals are executed either by controller **701,** or offloaded to a separate processing unit, e.g., a host.

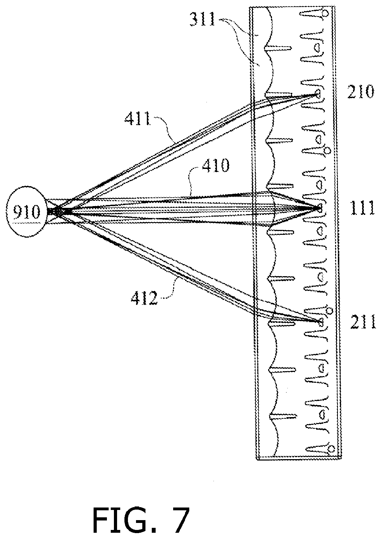

Reference is made to **FIGS. 7 - 12,** which are simplified diagrams of emitted and reflected light beams used in a touch screen system, in accordance with an embodiment of the present invention. **FIG. 7** shows detection of a distant object **910** based on two sets of reflected beams **411** and **412** detected by PDs **210** and **211,** respectively. **FIG. 7** shows how beams from one emitter **111** are detected by two PDs **210** and **211.** Reflected beams **411** and **412** each enter respective ones of lenses **311** at an angle whereby the lens focuses the beam into a respective PD.

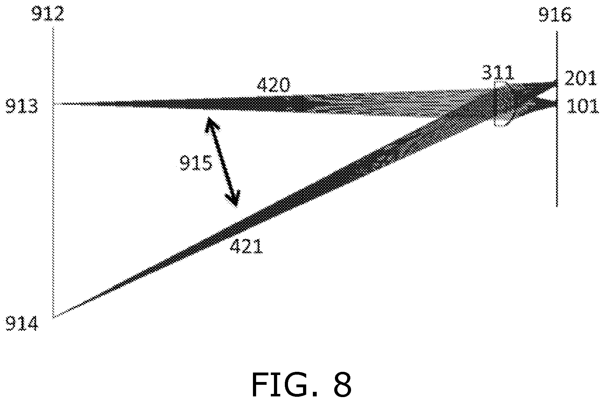

**FIG. 8** shows the design considerations for lens **311** and placement of emitter **101** and PD **201.** Lens **311** is aspherical and optimized to achieve a flat image plane **912** to maintain focus on both LED **101** and PD **201** simultaneously. LED **101** sits on the optical axis, centered on lens **311.** Point **913** is the image of LED **101** in image plane **912.** PD **201** sits at the edge of the field of view. Point **914** is the image of PD **201** in image plane **912.** In terms of an image captured through the lens on object plane **916,** LED **101** is the center pixel and PD **201** is a pixel at the edge of the captured image. The field of view for PD **201** is determined by the PD chip size, seen through the width of lens **311.** Rays that hit lens **311** from an angle outside the field of view of PD **201** will form an image in the same plane **916** but somewhere between LED **101** and PD **201.** Thus, these rays will not be captured by PD **201.**

Angle **915,** between emitter **101** beams **420** and reflected PD **201** beams **421,** is selected to fit the intended shape of the active touch-detection area. When the active touch-detection area is square, angle **915** is the diagonal of half a square, i.e., $tan^{-1}(1/2) \approx 26.6°$. When the depth of view is longer than the width of the touch sensor bar, angle **915** is smaller.

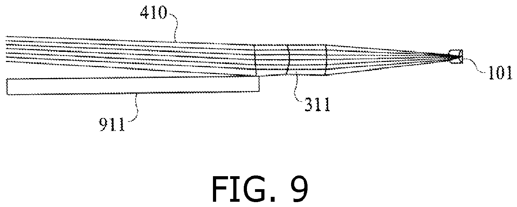

**FIG. 9** shows a side view of LED **101** projecting light beams **410** above and across the surface of screen **911.** In addition to being collimated by lens **311,** beams **410** are directed slightly upwards, away from the screen surface. This reduces the amount of light reflected by the surface of screen **911** in order to maximize the light utilized for touch detection.

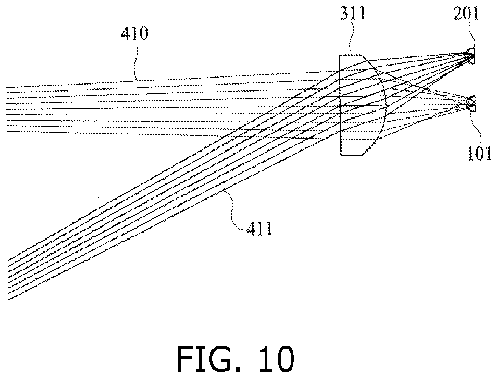

**FIG. 10** shows a view from above of one collimating lens **311,** an emitter **101** and a PD **201.** Reflected light beams approaching lens **311** at an angle of incidence between that of beams **410** and **411** are focused on a location between emitter **101** and PD **201.** Reflected light beams approaching lens **311** at an angle of incidence more acute than beam **411** are focused on a location above PD **201.** Thus, the lens and PD arrangement ensures that the system is sensitive to reflected light entering lens **311** at a specific angle.

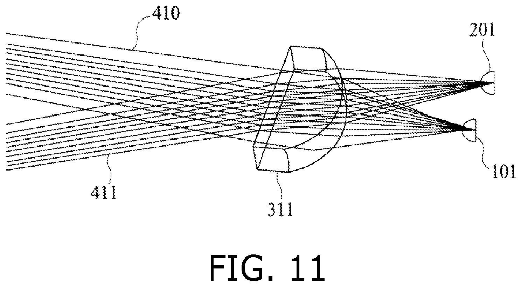

**FIG. 11** shows the lens and components of **FIG. 10** from a perspective view.

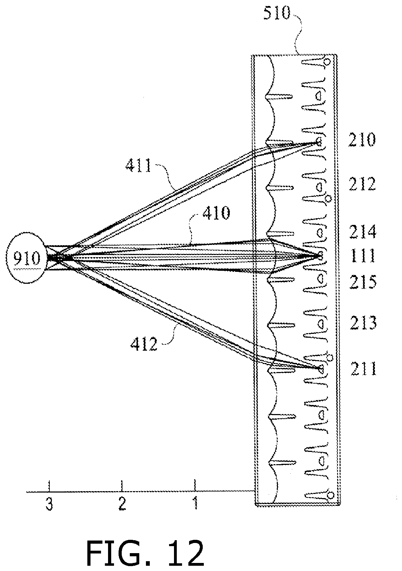

**FIG. 12** shows beams **411** and **412** reflected by an object **910** at distance 3 from touch detection bar **510.** Based on the detection angle for which the PDs and lenses are configured, as described above, the greatest detection signal is generated at PDs **210** and **211.** Thus, the touch location is determined to be opposite the activated emitter **111,** at a distance 3. These coordinates are easily converted to *x, y* screen coordinates. If, for example, the touch location were along beams **410** but at a distance 2 from touch detection bar **510,** the maximum detection signal would arrive at PDs **212** and **213.** Similarly, if the touch location were along beams **410** but at a distance 1 from touch detection bar **510,** the maximum detection signal would arrive at PDs **214** and **215.** More generally, each unit of distance along the emitter beam corresponds to a PD offset from the emitter. Thus, PDs **214** and **215** are at offset 0 from emitter **111,** PDs **212** and **213** are at offset 1, and PDs **210** and **211** are at offset 2. Right and left detection angles are illustrated by beams **411** and **412.**

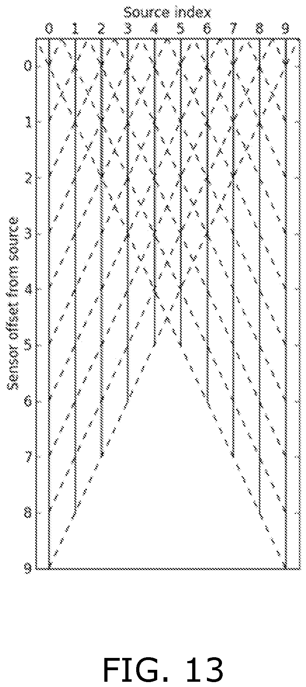

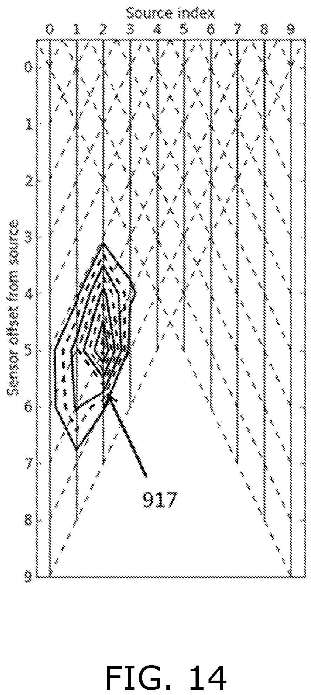

Reference is made to **FIGS. 13** and **14,** which are illustrations of touch detection maps, in accordance with an embodiment of the present invention. **FIG. 13** shows the PD offsets mapped to corresponding touch locations on the screen for light beams from emitters, 0 - 9. In **FIG. 13** PD offsets are indicated as sensor offsets, and emitter indices are indicated as source indices. Each emitter beam is represented by a vertical line beginning at one of the source indices. Each vertex in the diamond pattern on the mapped touch sensitive area corresponds to a touch location on the screen, and the dashed diagonal lines represent reflected beams at the specific right and left detection angles. The height of each vertex corresponds to its PD offset from the emitter. Thus, although the PDs are interleaved in a single row with the emitters, the PD offsets are arranged along a second axis in **FIG. 13** for clarity.

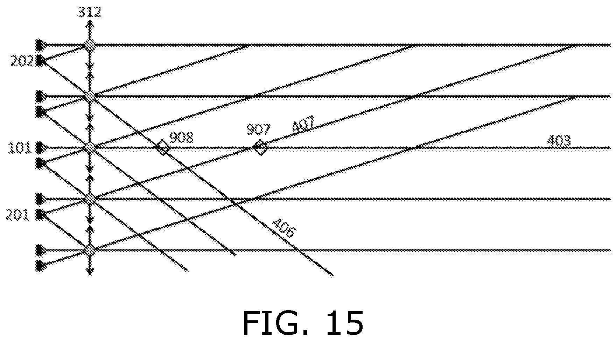

In the example described above, each detector receives beams from two lenses and is situated at a first location within the first lens's object plane and at the opposite location within the second lens's object plane. As a result, it is positioned to detect reflected beams entering the first lens at an angle θ with respect to the lens's optical axis, and reflected beams entering the second lens at an angle -θ to the optical axis. As a result, many of the positions associated with a first emitter-detector pair are also associated with a second emitter-detector pair. In order to provide a greater number of unique positions associated with emitter-detector pairs, each detector is situated at non-symmetrical locations with respect to its two lenses. This is illustrated in **FIG. 15**.

Reference is made to **FIG. 15,** which is a simplified illustration of a lens array **312** with alternating emitters and detectors, in accordance with an embodiment of the present invention. **FIG. 15** shows the detector being at two non-symmetrically opposite locations with respect to the two lenses of lens array **312**. Thus, emitter beam **403** is intersected at two different locations **907** and **908** by reflected beams **407** and **406.** In some embodiments, each detector is positioned at a slightly different pair of locations within the object planes of its lenses. This provides a non-uniform distribution of positions associated with the emitter-detector pairs.

**Touch Coordinate Algorithm**

This section describes in detail the operations performed to determine a tracked object's location. As explained in the previous section, for each activated emitter any of the PDs may receive the focused, reflected beams depending on the distance between the emitter and the reflecting object. Therefore, a scan of the entire screen outputs a table of PD detection values, where columns correspond to LEDs and rows correspond to PDs. Thus, for a detector having 10 LEDs and 11 PDs, the output table has 11 rows and 10 columns, wherein, the 11 entries in column 1 contain the detection values at each PD when emitter 1 is activated, the 11 entries in column 2 contain the detection values at each PD when emitter 2 is activated, etc. **TABLE I** is an example table containing raw detection values.

**TABLE I:** Raw detection values

|       | LED 0 | LED 1 | LED 2 | LED 3 | LED 4 | LED 5 | LED 6 | LED 7 | LED 8 | LED 9 |
|-------|-------|-------|-------|-------|-------|-------|-------|-------|-------|-------|
| PD 0  | 0     | 2     | 3     | 7     | 4     | 4     | 2     | 6     | 3     | 6     |
| PD 1  | 1     | 2     | 1     | 3     | 4     | 3     | 3     | 5     | 5     | 5     |
| PD 2  | 4     | 1     | 1     | 0     | 8     | 5     | 13    | 11    | 5     | 5     |
| PD 3  | 3     | 1     | 1     | 1     | 28    | 14    | 7     | 4     | 4     | 3     |
| PD 4  | 2     | 5     | 2     | 0     | 2     | 141   | 10    | 7     | 6     | 8     |
| PD 5  | 3     | 8     | 3     | 1     | 1     | 4     | 6     | 4     | 5     | 6     |
| PD 6  | 6     | 10    | 4     | 1     | 8     | 4     | 1     | 1     | 8     | 9     |
| PD 7  | 6     | 6     | 6     | 6     | 8     | 144   | 4     | 2     | 3     | 6     |
| PD 8  | 10    | 5     | 9     | 7     | 6     | 25    | 28    | 3     | 2     | 2     |
| PD 9  | 8     | 4     | 8     | 4     | 5     | 1     | 5     | 2     | 1     | 1     |
| PD 10 | 4     | 2     | 5     | 1     | 5     | 4     | 5     | 5     | 3     | 2     |

The two maxima in **TABLE I,** namely, raw detection values 141 and 144, are obtained from PD 4 and PD 7, respectively, when LED 5 is activated. PD 4 and PD 7 have an offset of 1 from LED 5, as PDs 5 and 6 are the immediate left and right neighbors of LED 5 and have an offset of 0.

The amount of light reflected by a near object onto a PD at offset 0 or 1 from the activated LED is greater than the amount of light reflected by a distant object onto a PD at offset 7 or 8 from the activated LED. Indeed, the greater the PD offset, the less light will reach the PD, assuming all other parameters remain constant. The PD value is digitized by an A/D converter having a given resolution, such as 12 bits or 16 bits. In order to fully utilize the range of values, in certain embodiments each emitter is activated with different amounts of current, or for different durations, depending on the offset of the target PD. The greater the offset, the greater the current and/or activation time, in order to utilize the full range of values without the risk of reaching the maximum detection value and possibly overflowing that value. Other factors contribute to the range of possible or expected PD detection values including the height of the lens **311** and the reflectivity of the pointing object. In particular, a greater lens height above the screen surface admits more light onto the target PD. In some embodiments, the amounts of expected PD detection values for the different PD offsets are determined heuristically based on experiment.

In some embodiments, the A/D converter outputs more bits than are used by the processor to calculate the touch location. For example, in some embodiments the A/D converter outputs 12-bit values and the processor uses 8-bit values. In these cases, it is important to determine the maximum expected 12-bit value. Based on this maximum, the system will remove most-significant-bits (msb) only when there is no risk that the value contains non-zero values in the removed msb. If the risk of overflow prevents the system from discarding msb, the system will remove least-significant-bits (lsb) to arrive at an 8-bit value. These maximum values are also determined by heuristics and depend on the PD offset.

Heuristics are also used to prepare a reference detection value for each LED-PD pair. Thus, each of the detected PD values in the detection table described above is divided by a respective reference value to normalize all values in the table to a range of 0 - 1. FIG. 14 shows a detection map of normalized detection values for a touch corresponding to LED 2 and the PDs at offset +/- 5. Since there is no corresponding PD at offset -5 from LED 2, only the PD at offset +5 generates this maximum detection signal. The detection map of FIG. 14 includes concentric solid- and dashed-line shapes 917 where each inner shape is greater than its outer neighbor, such that the maximum detection signal is at the center. If FIG. 15 were to be rendered in color or varying degrees of grayscale, the innermost shape would be darkest, and the shapes would become progressively lighter as they expand. However, color and shading has been removed from FIG. 14 in order to render it in pure black and white.

Not only is the absolute value of a detection signal useful for determining the touch location, but the relationship between neighboring signals is also an important factor.

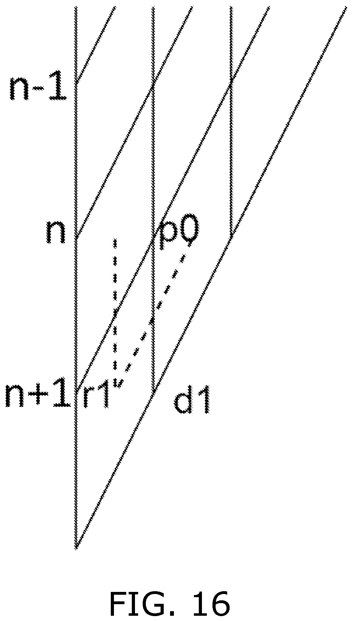

Reference is made to FIGS. 16 - 21, which are simplified touch detection maps for illustrating the algorithms used to calculate a touch location in a touch screen system, in accordance with an embodiment of the present invention. FIG. 16 shows a portion of the detection map of FIG. 13. As described above, the solid vertical lines represent emitter beams. More precisely, each vertical line represents the center of the beams from a given emitter. The emitter beams are considered to have a normal, bell-shaped distribution around the center of the beam. Similarly, the solid diagonal lines in FIG. 16 represent the optimal reflected beam that generates a maximum detection value at a PD at a given offset. The detection values for beams parallel to, and in between, these diagonal beams are considered to have a normal, bell-shaped distribution of detection at the PD with the given offset. These distribution properties provide the ability to determine locations between the solid vertical and diagonal lines, or between the vertices in the detection map of FIG. 13 that indicate points of maximum detection, by comparing neighboring detection signals. Thus, the point of contact is based on six lemmas listed below.

Lemma 1: If the reflecting object is translated parallel to the diagonal detection lines of the PDs, the relationship between detection signals of neighboring PDs detecting the same LED remains constant.

Lemma 1 is illustrated in FIG. 16. FIG. 16 shows a portion of the detection map of FIG. 13 wherein the three solid vertical lines represent portions of three emitter beams and the four solid diagonal lines represent four detector beams. As mentioned above, points of maximum detection levels are at the vertices where an emitter beam crosses a detector beam. Three such vertices are labeled in FIG. 16, namely p0, r1 and d1, each label being to the right of its corresponding vertex. In a case where the touch object is at the midpoint between p0 and d1, the ratio of the detection signal representing point p0 and the detection signal representing point d1 would be roughly equal. Moreover, as long as the touch object is translated along the dashed diagonal line between p0 and d1, this ratio remains constant. Thus, based on the ratio between the two highest detection signals of neighboring PDs detecting the same LED, a line can be drawn parallel to the diagonal dashed line in FIG. 16, and the touch location should be somewhere on that drawn line. The drawn line will be closer to vertex p0 or d1 depending on the magnitude of this ratio.

Lemma 2: If the reflecting object is translated parallel to the vertical emitter lines of the LEDs, the relationship between detection signals of one PD detecting two, neighboring LEDs remains constant.

Lemma 2 is also illustrated in FIG. 16. Vertex p0 represents an LED beam whose reflection is detected at a PD with an offset n from the activated LED. Vertex r1 represents a neighboring LED beam whose reflection is detected at a PD with an offset n+1 from the activated LED. However, since the activated LED for r1 is a neighbor of the activated LED for p0, the same PD used for p0, whose offset is n, is used for r1, since this PDs offset from the r1 LED is n+1. In a case where the touch object is at the midpoint between p0 and r1, the ratio of the detection signal representing point p0 and the detection signal representing point r1 would be roughly equal. Moreover, as long as the touch object is translated along the dashed vertical line between p0 and r1, this ratio remains constant. Thus, based on the ratio between the two highest detection signals of one PD detecting two, neighboring LEDs, a line can be drawn parallel to the vertical dashed line in FIG. 16, and the touch location should be somewhere on that drawn line. The drawn line will be closer to vertex p0 or r1 depending on the magnitude of this ratio.

Lemma 3: Combining Lemmas 1 and 2 provides a rhomboid area in which the touch is located. Three of the vertices of this rhomboid area are vertices r1, p0 and d1. Moreover, the exact touch location is at the point of intersection between the drawn line of Lemma 1 and the drawn line of Lemma 2.

Lemmas 1 - 3 apply to small touch objects that reflect light from a single point. Larger touch objects reflect along a side of the object, perpendicular to the LED beams. Thus, in the case of a large touch object, there is a wider, more even distribution of maximum detection values representing a series of reflection points that are equally distant from their respective LEDs. Lemmas 4 - 6 relate to large touch objects.

Lemma 4: If the reflecting object is translated perpendicular to the vertical emitter lines of the LEDs, the relationship between detection signals of neighboring PDs detecting the same LED remains constant.

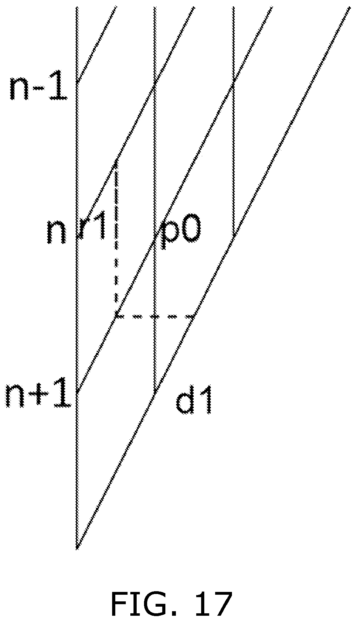

Lemmas 4 - 6 are illustrated in **FIG. 17. FIG. 17** shows a portion of the detection map of **FIG. 13** wherein the three solid vertical lines represent portions of 3 emitter beams and the four solid diagonal lines represent 4 detector beams. As mentioned above, points of maximum detection levels are at the vertices where an emitter beam crosses a detector beam. Three such vertices are labeled in **FIG. 17,** namely **p0, r1** and **d1,** each label being to the right of its corresponding vertex. In a case where a large reflecting object is placed between **p0** and **d1,** the ratio of the detection signal representing point **p0** and the detection signal representing point **d1** would be roughly equal. Moreover, as long as the touch object is translated along the dashed horizontal line between **p0** and **d1,** this ratio remains constant. Thus, based on the ratio between the two highest detection signals of neighboring PDs detecting the same LED, a line can be drawn parallel to the diagonal dashed line in **FIG. 17,** and the touch location should be somewhere on that drawn line. The drawn line will be closer to vertex **p0** or **d1** depending on the magnitude of this ratio.

Lemma 5: If the reflecting object is translated parallel to the vertical emitter lines of the LEDs, the relationship between detection signals having similar offsets from their respective LEDs remains constant.

Because Lemma 5 relates to wide reflective objects that reflect light at many locations equally-distant from the row of LEDs, the two highest detection values will come from neighboring PDs having similar offsets from their respective LEDs. Accordingly, Lemma 5 is also illustrated in **FIG. 17.** Vertex **p0** represents an LED beam whose reflection is detected at a PD with an offset *n* from the activated LED. Vertex **r1** represents a neighboring LED beam whose reflection is *also* detected at a PD with an offset *n* from its activated LED. In a case where the touch object is at a point between **p0** and **r1,** the ratio of the detection signal representing point **p0** and the detection signal representing point **r1** would be roughly equal. Moreover, as long as the touch object is translated along the dotted vertical line between **p0** and **r1,** this ratio remains constant. Thus, based on the ratio between the two highest detection signals of two neighboring PDs detecting two, neighboring LEDs, a line can be drawn parallel to the vertical dashed line in **FIG. 17,** and the touch location should be somewhere on that drawn line. The drawn line will be closer to vertex **p0** or **r1** depending on the magnitude of this ratio.

Lemma 6: Combining Lemmas 4 and 5 provides a rectangular area in which the touch is located. Three of the vertices of this rectangular area are vertices **r1, p0** and **d1** in **FIG. 17.** Moreover, the touch location is at the point of intersection between the drawn line of Lemma 4 and the drawn line of Lemma 5.

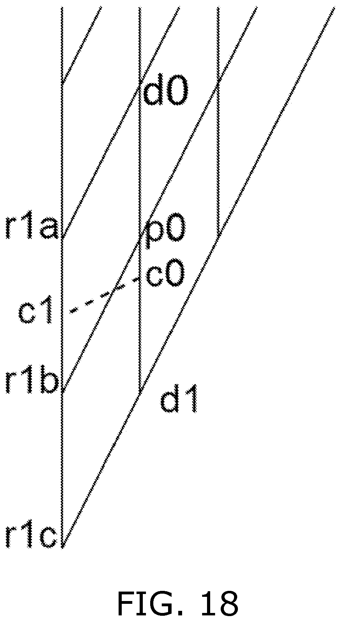

According to certain embodiments of the invention, the touch location is derived based on a combination of Lemmas 1 - 6. This method proceeds in three steps. Step 1 calculates two interpolated points along two neighboring LED beams. Step 2 draws a line connecting the two interpolated points. Step 3 calculates a point along the line drawn at step 2 by interpolating the amplitudes of the two endpoints calculated at step 1. This method is described with reference to **FIG. 18.**

**FIG. 18** shows a portion of the detection map of **FIG. 13,** wherein the three solid vertical lines represent portions of 3 emitter beams and the four solid diagonal lines represent 4 detector beams. As mentioned above, points of maximum detection levels are at the vertices where an emitter beam crosses a detector beam. Six such vertices are labeled in **FIG. 18,** namely, **p0, d0** and **d1,** each labeled to the right of a corresponding vertex, and, **r1a, r1b** and **r1c,** each labeled to the left of a corresponding vertex. When performing this method, point **p0** is the maximum detection signal for this touch object. The PD for point **p0** has two neighboring PDs, one to the left (for detection point **d1**) and one to the right (for detection point **d0),** that also detect the same LED as used for **p0.** The PD having the higher detection signal is used. In **FIG. 18,** this second detection signal of the neighboring PD detecting the same LED as **p0,** is **d1.** The normalized detection signals at **p0** and **d1** are interpolated to generate a new location, **c0,** on the LED beam between vertices **p0** and **d1.** In addition to location **c0,** the interpolation also calculates an amplitude of the signal at **c0.**

Next, the method calculates a second new location, along a neighboring LED beam. Thus, relevant reflections from left and right neighboring beams are compared and the beam returning the greater signal is used. In **FIG. 18,** the beam to the left of the **p0** beam is selected. Vertex **r1b** uses the same PD as used for **p0,** but it detects a left-neighbor LED. Next, the normalized signals at **r1a** and **r1c** are compared and the greater signal is selected. The **r1b** detection signal and the selected **r1a/r1c** signal are interpolated to generate a new location, **c1,** on the LED beam between vertices **r1b** and **r1a** or **r1c.** In addition to location **c1,** the interpolation also calculates an amplitude of the signal at **c1.**

The two points **c0** and **c1** define a line along which the touch location is to be found. This is the dashed line in **FIG. 18.** The calculated signal amplitudes at **c0** and **c1** are interpolated to determine the touch location along this line.

As mentioned above, the relationship between two signals is expressed as the quotient ($q$) between them. The source beam light intensity is assumed to behave as a normal distribution on both sides of the beam center line. The reflection intensity is proportional to the light intensity. The detection signal value of a reflection is also assumed to be distributed as a normal distribution on both sides of the detection center line. The standard deviations of these distributions vary according to the distance of the reflecting object, but are assumed to be constant within a small range of distances.

Since the reflection (*r*) and detection (*d*) intensities of a signal *s* - $f_{sr}$ and $f_{sd}$ respectively, are of the normal distribution, they are expressed as the Gaussian function:

$$f_{si} = p_i(x) A \, e^{-\frac{(x-x_{si})^2}{2\sigma_{si}^2}} \, , \qquad\qquad \textbf{(EQ. 1)}$$

where *i* is *r* or *d, x* is the reflection location, $x_{si}$ is the location of the source beam or sensor detection line, $p_i(x)$ is the typical peak strength at the current reflection distance, and A is the amplitude. The quotient between two intensities is then:

$$q_{s_0,s_1,i} = \frac{f_{s_1 i}}{f_{s_0 i}} = e^{-\frac{(x-x_{s_1 i})^2 - (x-x_{s_0 i})^2}{2\sigma_{s_0,1 i}^2}} \, . \qquad\qquad \textbf{(EQ. 2)}$$

Assigning $x \in [0,1]$, and approximating $\sigma_{s_{0,1}i} \approx \sigma_{s0i} \approx \sigma_{s1i}$, **EQ. 2** can be simplified to:

$$q_{s_0,s_1,i} = e^{\frac{x - 1/2}{\sigma_{s_{0,1}i}^2}} \, . \qquad\qquad \textbf{(EQ. 3)}$$

That gives the interpolated coordinate x:

$$x = \frac{1}{2} + \sigma_{s_{0,1}i}{}^2 \ln \frac{f_{s_1 i}}{f_{s_0 i}} \, , \qquad\qquad \textbf{(EQ. 4)}$$

and the amplitude *A:*

$$A = \frac{f_{si}}{p_i(x)} e^{\frac{(x-x_{si})^2}{2\sigma_{si}^2}} \, . \qquad\qquad \textbf{(EQ. 5)}$$

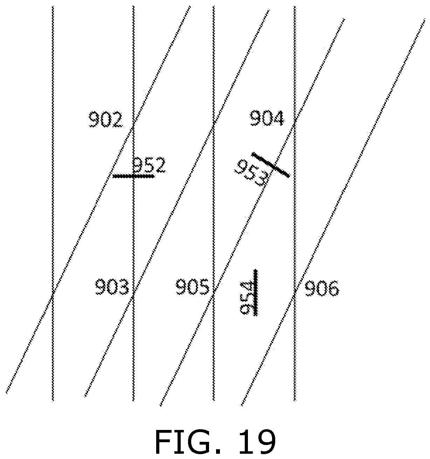

In some embodiments, when the size and shape of the object to be detected by the proximity sensor is known, the Hough transform is used. For example, when a finger is used to perform input, its expected shape within the detection plane is an ellipse of a known size. In this case, processor **702** is provided with a plurality of candidate ellipses within the detection plane. Processor **702** determines for which co-activated emitter-detector pairs the detector generates a detection signal, and identifies the positions associated therewith. Next, processor **702** interpolates the detection signals for any two of the co-activated emitter-detector pairs whose two associated positions are neighbors, to determine an intermediate location between those two associated positions. Processor **702** then assigns an orientation to each intermediate location, the orientation being perpendicular to the line connecting the two neighboring associated positions. This process is illustrated in **FIG. 19.**

**FIG. 19** shows positions **902** - **906** each associated with an emitter-detector pair. Position **902** is interpolated with position **903** to produce intermediate location **952** having horizontal orientation. The detection signal corresponding to position **902** is, in this illustrative example, greater than the detection signal corresponding to position **903.** Hence, the location of intermediate location **952** is closer to **902** than **903.** Similarly, intermediate location **953** is interpolated using positions **904** and **905,** where the detection signal corresponding to position **904** is greater than that corresponding to position **905;** and intermediate location **954** is interpolated using positions **905** and **906,** where the detection signals corresponding to these positions are roughly equal, hence the location of **954** is at the midpoint between positions **905** and **906.**

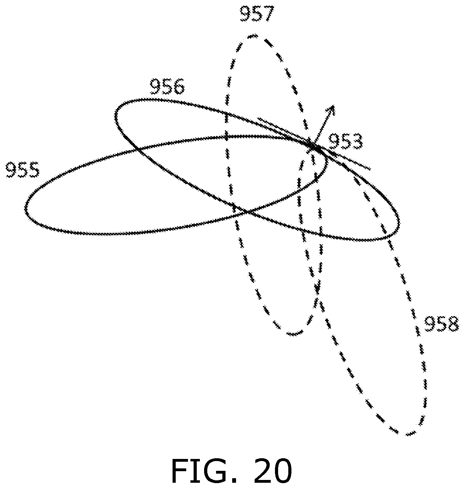

For each candidate ellipse, processor **702** assigns a match value to the candidate ellipse, the match value representing a degree of match between an edge of the candidate ellipse and the location and orientation of an intermediate location. **FIG. 20** shows four ellipses **955** - **958.** Interpolated location **953** is assigned a high match value to ellipses **955** and **956** and a very low (or zero) match value to ellipses **957** and **958** because the orientation of interpolated location **953** does not match that of its corresponding location in these ellipses.

Processor **702** calculates a sum of the thus-assigned match values for each candidate ellipse, and designates that candidate ellipse with the maximum thus-calculated sum as being the location of the object in the detection plane.

**Implementation**

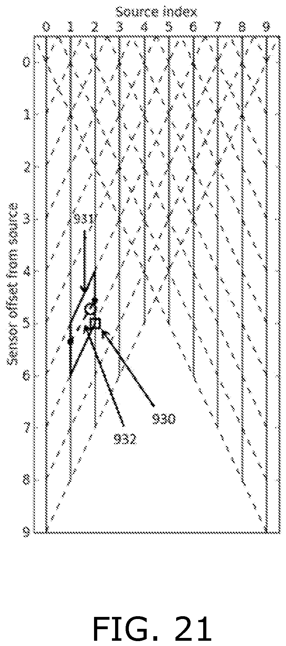

The signals are filtered for maxima. A maximum is a signal greater than its 8 immediate neighbors: top, bottom, left, right and four diagonal neighbors. For the portion of the touch-sensitive area in which a reflective object produces two detection signals, namely, one at an offset +*n* from the active LED and one at an offset -*n,* two maxima will be generated by the reflective object. In this case, in some embodiments, only the greater of these two maxima is used. **FIG. 21** shows maximum **930.**

As explained above, the maximum signal is one corner of an area in which the reflecting object is located. This area is a rectangle or rhombus connecting adjacent neighbors. The area is chosen to include the strongest signals. The deduced reflection location will be somewhere inside this area.

Next, two signals neighboring the maximum signal are compared, namely, the two PDs on either side of the maximum signal PD detecting the same LED as the maximum signal. These correspond to vertices above and below maximum **930** in **FIG. 21,** along the same emitter beam. The greater of these two signals is selected, and accordingly, one side of the rectangular, or rhomboid, object location area extends from the maximum signal vertex to the selected neighboring vertex. In **FIG. 21,** the vertex above maximum **930** was selected.

Next, the signals from neighboring LEDs to the left and right are compared to decide whether to extend the area in which the reflecting object is located to the left or right. On the left side, the two locations directly left of the locations on the first area side, plus one more directly below them are used. On the right, it is the two points to the right, plus one more above them. The side that contains the highest signal is the side the area is extended to. On the left side, if the top-most signal is stronger than the bottom-most, the area in which the reflecting object is located is determined to be a rectangle. If not, it is a rhombus extended to include the bottom-most location. On the right side, the same comparison is made. If the bottom-most signal is stronger than the top-most, then the area in which the reflecting object is located is determined to be a rectangle. If not, it is a rhombus that extends to include the top-most location. In **FIG. 21,** the area in which the reflecting object is located is a rhombus extended to the left and down, i.e., rhombus **931** with vertex **930** at its lower right corner.

As explained above, each pair of selected vertices representing two reflection detections from one LED are interpolated to find two points **(c0, c1,** in **FIG. 18)** that define a line **932** on which the reflecting object is located. Both the location and amplitude of the points are calculated, as described above.

The same interpolation method is used again to find the reflection location along this line and its amplitude. The amplitude may be interpreted as reflectivity, which in turn is proportional to the diameter of the reflecting object.

At times, multiple, unconnected maxima are identified. In such cases, the interpolated location and reflectivity of each maximum is calculated. Those coordinates found to have a reflectivity or amplitude value above a defined threshold are stored as reflective object locations. Thus, a frame representing the entire scanned touch area may contain a list of simultaneous touch objects, each object having a corresponding location.

In a sequence of such frames, reflective objects in the frame at time *t+1* are compared to the reflective objects of the previous frame, at time *t.* The objects in the two frames are paired using a greedy pairing algorithm according to a minimum distance between paired objects. Paired objects are tracked as being the same object. New objects not paired are added as new tracking targets, and old tracking targets not paired to new ones are removed.

The location and reflectivity parameters of the tracked objects are calculated as the old parameters (at time *t*), updated with a prediction based on constant speed, and a fractional interpolation towards the new parameters (at time *t+1*). The detected location $l_d$ is used to update previous tracked location $l_0$ together with the tracked velocity vector $v_0$ to determine the updated location and velocity $l_1$ and $v_i$:

$$l_1 = (1 - \alpha)(l_0 + \beta v_0) + \alpha l_d \, , \qquad \textbf{(EQ. 6)}$$

$$v_1 = l_1 - l_0 \, , \qquad \textbf{(EQ. 7)}$$

where $\alpha$ is the relative weight applied to the detected (*t*+1) position in the interpolation, and $\beta$ represents how constant the velocity is assumed to be.

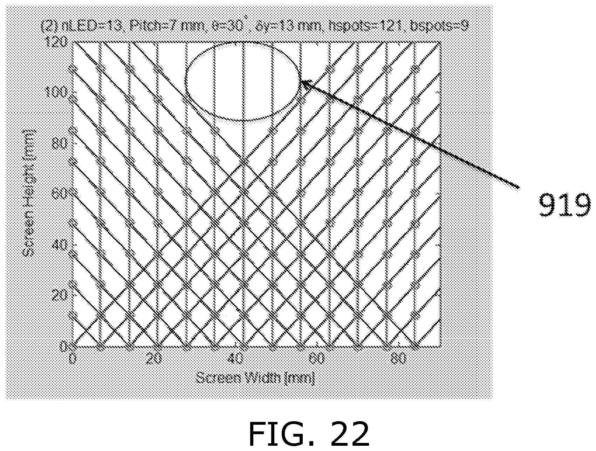

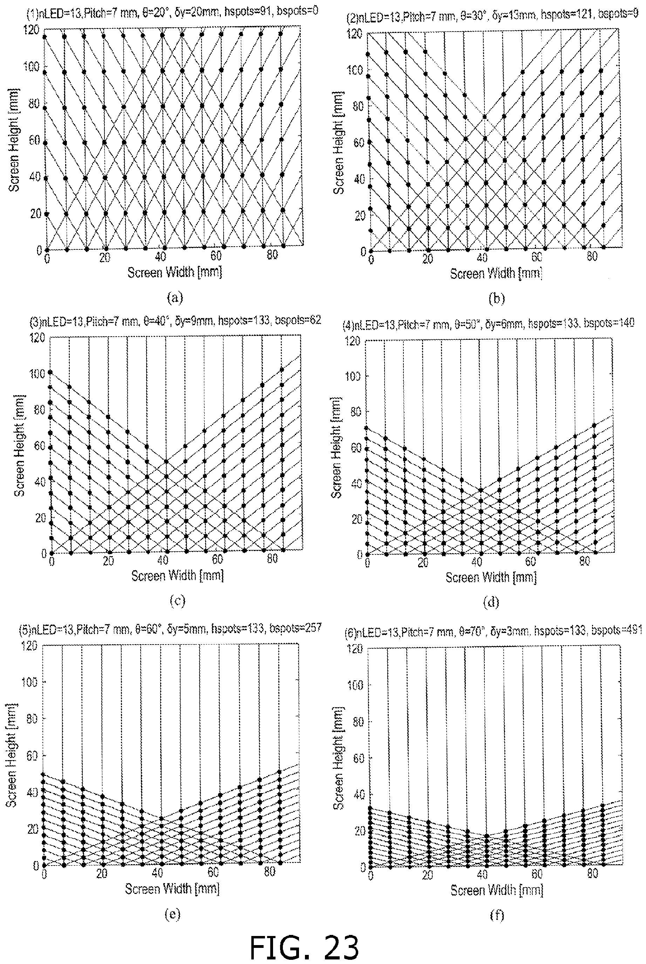

Reference is made to **FIGS. 22** and **23(a) - (f),** which are simplified touch detection maps for various touch screen system embodiments, in accordance with the present invention. As mentioned hereinabove, the optical proximity sensor PDs are paired with lenses that optimize detections of reflected light for an angle θ, indicated by the diagonal lines shown in **FIGS. 22** and **23(a) - (f).** The vertical lines in **FIGS. 22** and **23(a) - (f)** represent light emitted by the sensor LEDs. Detection hotspots are points of intersection between the vertical emitter beams and the diagonal optimized detection paths. These hotspots are indicated by a small circle at each intersection.

**FIG. 22** shows a triangular section **919** where objects are not detected by the sensor. **FIG. 23(a) - (f)** illustrates how the size of the area in which an optical proximity sensor can detect an object depends on the angle for which the sensor's PDs are optimized. In **FIG. 23(a)** θ = 20°; in **FIG. 23(b)** θ = 30°; in **FIG. 23(c)** θ = 40°; in **FIG. 23(d)** θ = 50°; in **FIG. 23(e)** θ = 60°; and in **FIG. 23(f)** θ = 70°. In the examples of **23(a)** - **(f)** the maximum distance from the sensor bar is 120 mm and the bar is 91 mm long with a pitch between neighboring light elements along the bar of 7 mm. In **FIG. 23(a)** the height of the screen (120 mm) is covered with detection hotspots.

The density of these hotspots can be broken down into an optical x resolution, which is the pitch between neighboring light elements within the sensor bar, and an optical y resolution that depends on the angle θ. The examples illustrated in **23(a)** - **(f)** show how increasing resolution in the y dimension corresponds to shallower detection zones.

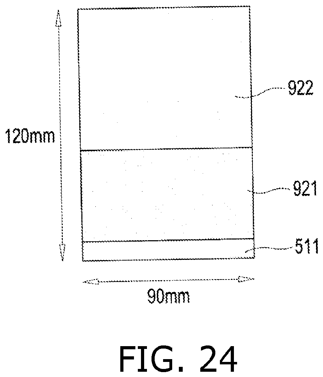

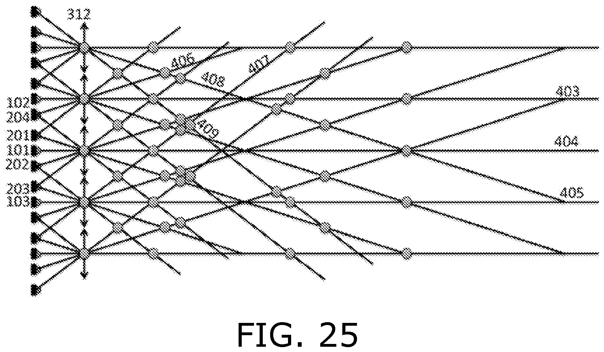

Accordingly, the present invention teaches a dual-resolution screen whereby a narrow area adjacent to the sensor bar provides high-resolution touch detection and a second area further from the sensor bar provides low-resolution touch detection. Reference is made to **FIGS. 24** and **25,** which are simplified illustrations of a dual-resolution sensor, in accordance with an embodiment of the present invention. **FIG. 24** shows touch sensor bar **511,** a narrow, high-resolution detection zone **921** and a low-resolution detection zone **922.** One application for this dual-resolution sensor is to provide a GUI wherein keypads and other tap-activated controls are placed in the high-resolution zone, and coarse gestures such as sweep gestures and pinch gestures are supported in the low-resolution zone.

Two solutions provide multiple resolution zones. A first solution places two detectors between every two emitters. Thus, every lens pitch has two detectors and one emitter, and every lens directs four different reflected beams onto four different detectors. This is illustrated in **FIG. 25,** which shows emitters **101** - **103** and detectors **201** - **204.**

A second solution teaches a touch sensor bar in which some of the PD lenses are optimized for a first detection angle, e.g., $\theta_1 = 50°$, and other PD lenses are optimized for a different detection angle, e.g., $\theta_2 = 20°$. The first detection angle provides a high-resolution detection zone adjacent to the bar, and the second detection angle provides detection further away from the sensor bar at a lower resolution.

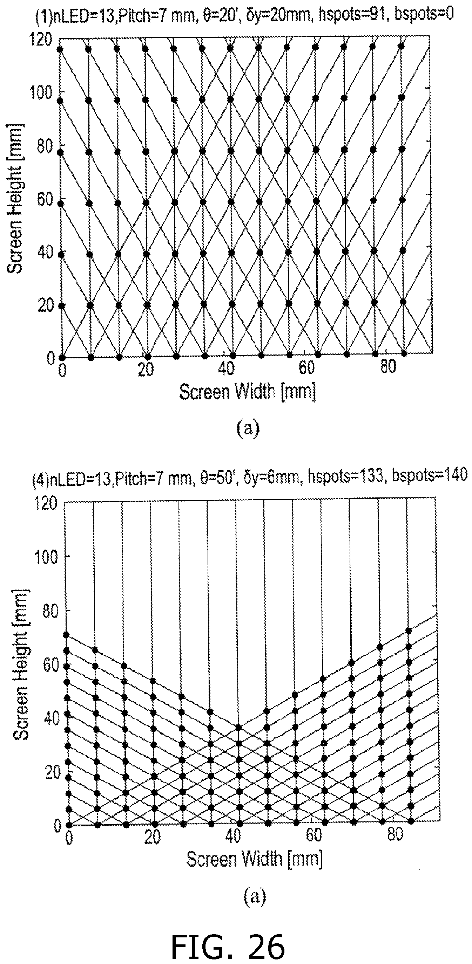

Reference is made to **FIGS. 26(a)** and **(b),** which are simplified illustrations of two detection maps used in a dual-resolution sensor, in accordance with an embodiment of the present invention. **FIG. 26(a)** shows a zone that extends 120 mm from the sensor but has a low optical y resolution of 20mm, and **FIG. 26(b)** shows a detection zone near the sensor, having a higher optical y resolution of 6 mm.

In certain embodiments of the proposed dual-resolution sensor bar, the layout alternating LEDs **101** and PDs **201** described hereinabove with reference to **FIGS. 4** and **5** is maintained and PDs **101** are positioned to receive a maximum amount of light from a first detection angle $\theta_1$. In addition, a second, parallel row of PDs is provided for receiving a maximum amount of light from a second detection angle $\theta_2$. Thus, twice as many PDs are used in the dual resolution sensor than in the sensor of **FIGS. 4** and **5,** and the reflected light beam in the dual-resolution sensor is split between the two PDs.

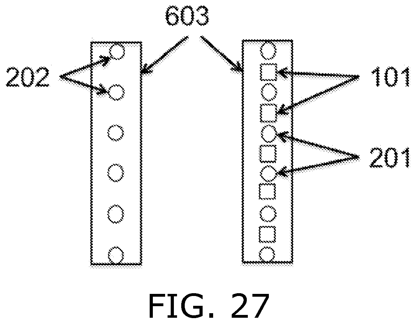

Reference is made to **FIG. 27,** which is a simplified view from above of LEDs and PDs on a PCB for a dual-resolution sensor, in accordance with an embodiment of the present invention. **FIG. 27** shows a top view of the layout of light elements on PCB **603** in an embodiment of the dual-resolution sensor. **FIG. 27** shows the first row of alternating LEDs **101** and PDs **201** and a parallel row of PDs **202.** The pitch between PDs **202** in the second row is the same as that between PDs **201** in the first row.

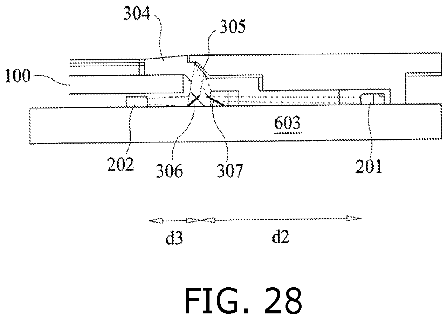

Reference is made to **FIG. 28,** which is a simplified cross-section illustration of a dual-resolution sensor, in accordance with an embodiment of the present invention. **FIG. 28** shows the lenses and placement of the PDs in a dual resolution sensor. PD **202** provides the narrow, high-resolution detection zone **921** near the sensor bar, and PD **201** provides the longer, low-resolution detection zone **922** that extends farther away from the sensor bar. Shown in **FIG. 28** are screen **100,** PCB **603** on which PDs **201** and **202** are mounted together with light guide 304. Light guide **304** includes three reflective facets: **305, 306** and **307.** Light reflected by an object touching screen **100** enters light guide **304** and is redirected downward by reflective facet **305.** This downward beam is then split by two reflectors **307** and **306** which direct different portions of the beam onto PDs **201** and **202,** respectively.

## Applications

The present invention has broad application to electronic devices with touch sensitive screens, including small-size, mid-size and large-size screens. Such devices include inter alia computers, track pads for laptops and computers, home entertainment systems, car entertainment systems, security systems, PDAs, cell phones, electronic games and toys, digital photo frames, digital musical instruments, e-book readers, TVs and GPS navigators.

## Secondary Keyboard Display

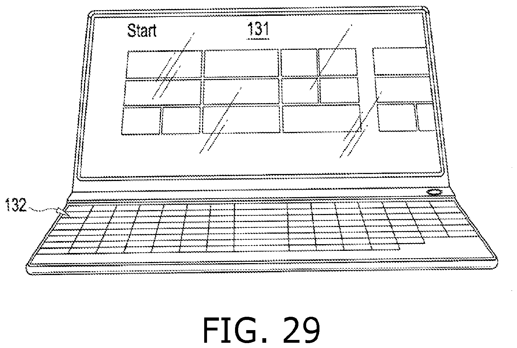

Reference is made to **FIG. 29,** which is a simplified illustration of a dual-display laptop, in accordance with an embodiment of the present invention. The laptop features two panels connected by a hinge. The upper panel contains the primary laptop display **131.** The lower panel contains a touch-sensitive, secondary display **132** that is used as an input device to the laptop. Thus, a keypad is rendered on secondary display **132** and text is entered by the user tapping on the displayed keys. Tap gestures are characterized by a brief contact, i.e., touch-and-release, with the secondary display. Thus, tap gestures are distinguishable from glide gestures which are characterized by prolonged contact with the display during which the point of contact is translated along the display. Thus, in addition to text entry, the secondary display controls a mouse cursor on the primary display when the user glides his finger on the secondary display.

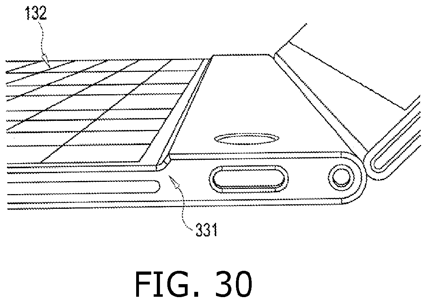

According to an embodiment of the present invention the touch sensor used in conjunction with secondary display **132** is optical proximity sensor **512**, as described hereinabove, situated along one edge of the secondary display. Reference is made to **FIG. 30**, which is a simplified illustration of a portion of a dual-display laptop, in accordance with an embodiment of the present invention. **FIG. 30** shows a bezel **331** along the top edge of the secondary display for housing the optical proximity sensor.

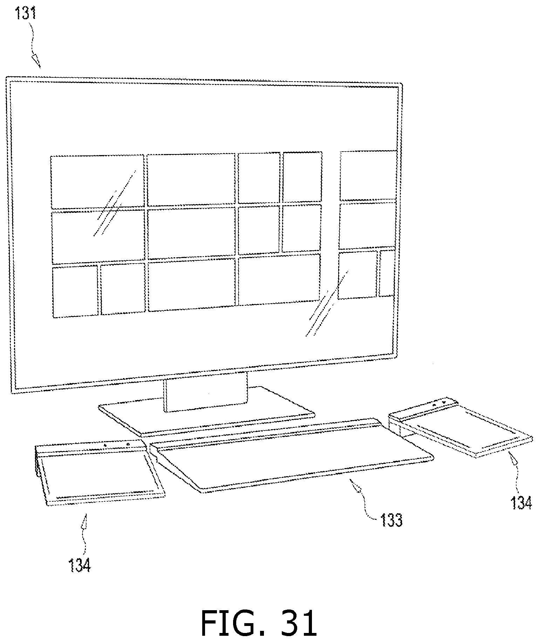

Reference is made to **FIG. 31**, which is a simplified illustration of a PC, in accordance with an embodiment of the present invention. **FIG. 31** shows a PC having a display **131**, keyboard **133** and two trackpads **134**, in accordance with an embodiment of the present invention.

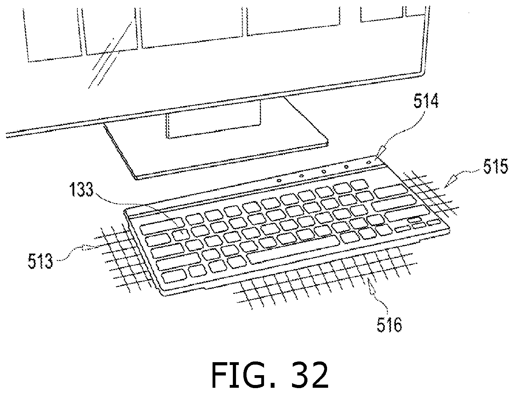

Reference is made to **FIG. 32**, which is a simplified illustration of keyboard **133** of the PC of **FIG. 31**, in accordance with an embodiment of the present invention. The keyboard has four embedded optical proximity sensors **513** - **516**. Optical proximity sensors **513, 515** and **516** are placed along the left, right and bottom edges of keyboard **133** facing away from the keyboard to detect hand and finger gestures in the airspace surrounding the keyboard. These gestures serve as inputs to the computer, e.g., to control a mouse pointer or to enlarge or rotate an image on the display. Optical proximity sensor **514** is along the top edge of keyboard **133** and faces the keyboard. It is used to detect glide gestures along the surface of the keys as inputs to the computer, e.g., to control a mouse pointer or to enlarge or rotate an image on the display. The keyboard's large size relative to traditional trackpads enables dividing the keyboard surface into two trackpad sections. The left half of keyboard **133** serves as an absolute position trackpad. This means that every location on this half of the keyboard is mapped to a corresponding location on the screen. Before a glide gesture is performed, the mouse cursor is at some initial location on the screen. When a glide gesture is performed on the left half of the keyboard the mouse cursor is suddenly moved to the corresponding location on the display. For example, when the mouse cursor is at the upper right corner of the display and the user begins a glide gesture in the lower left corner of the keyboard, the mouse cursor begins its corresponding movement from the lower leftover of the screen. This spares the user the effort of having to perform a long mouse gesture to move the cursor across the screen. The right half of keyboard **133** serves as a relative-position trackpad meaning that when a glide gesture is detected in this half of the keyboard the mouse cursor is translated from its initial screen location according to the relative movement of the glide gesture. Thus, the user can perform an initial glide gesture in the left half of the keyboard to place the mouse cursor in a desired area of the screen and then apply a glide gesture in the right half of the keyboard to move the cursor.

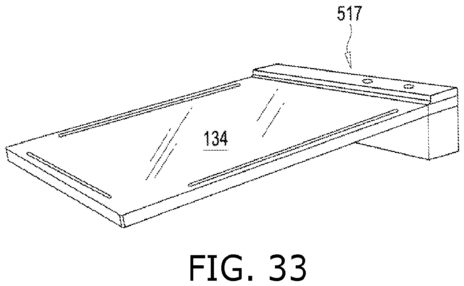

Reference is made to **FIG. 33**, which is a simplified illustration of a PC trackpad **134**, in accordance with an embodiment of the present invention. Trackpad **134** is a transparent slab of acrylic slightly tilted toward the user. Optical proximity sensor **517** along the top edge of the trackpad tracks the user's gestures on the slab. Because no electronics are needed on the trackpad outside the optical sensor, trackpad **134** is made of entirely clear, transparent acrylic or glass.

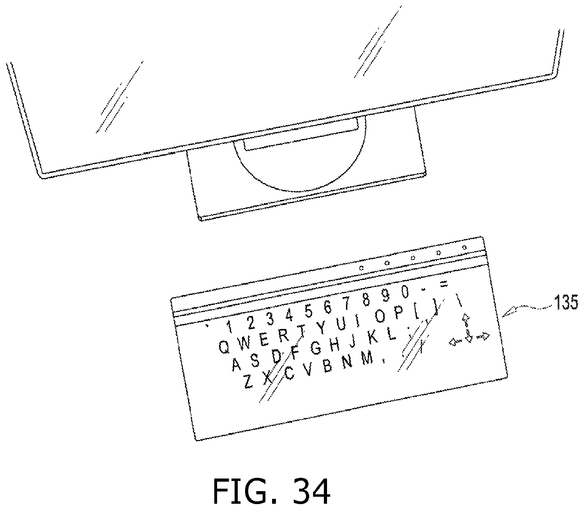

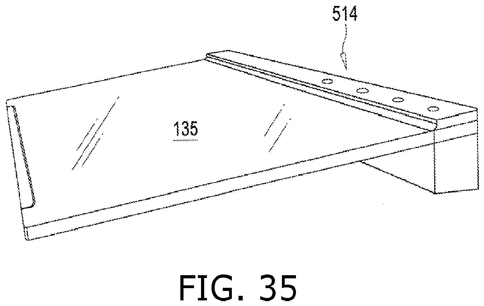

Reference is made to **FIG. 34**, which is a simplified illustration of transparent PC keyboard **135**, in accordance with an embodiment of the present invention. Reference is also made to **FIG 35**, which is a side perspective view of transparent keyboard **135** of **FIG. 34**, in accordance with an embodiment of the present invention. Similar to trackpad **134** of **FIG. 33**, keyboard **135** is enabled by an optical proximity sensor along its upper edge and a transparent slab of acrylic. The transparent acrylic slab has the keyboard characters etched inside it such that, when visible light is projected to the acrylic slab, the light is reflected by the etchings making the letters visible. When this light is turned off, the etchings are not visible and the keyboard appears as an empty transparent slab. Thus in keyboard mode the visible light is turned on and in mouse or sweep-gesture input mode the visible light is turned off. The visible light source is mounted together with the optical proximity sensor along the upper edge of the acrylic slab.

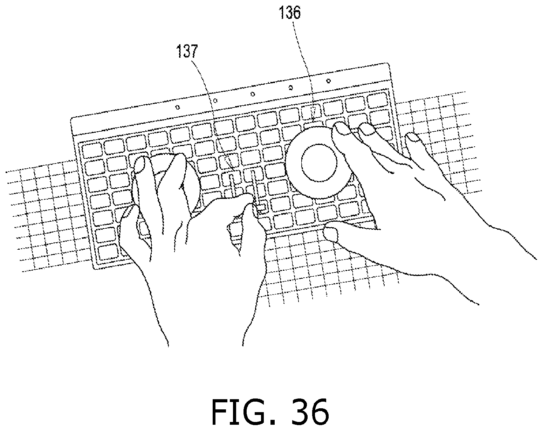

Reference is made to **FIG. 36**, which is a simplified illustration of a secondary display that provides keyboard and GUI functionality, in accordance with an embodiment of the present invention. **FIG. 36** shows a keyboard having a touch sensitive display. The keyboard characters are rendered by the display. However, an application can also render other UI controls to indicate what gestures to perform on the keyboard display. In **FIG. 36** two slider wheels **136** and two slider bars **137** are rendered indicating available rotation gestures and slide gestures to the user.

**Vertical Toolbar Approach Gestures**

The Windows 8 operating system from Microsoft Corporation features a vertical toolbar known as the charms that is accessed by swiping from the right edge of a touchscreen, or pointing the cursor at hotspots in the right corners of a screen. WINDOWS® is a registered trademark of Microsoft Corporation. The charms toolbar provides access to system and app-related functions, such as search, sharing, device management, settings, and a Start button. Swiping from the left edge of the touchscreen primary display or clicking in the top-left corner of the primary display allows one to switch between apps and the Desktop. In order to make these sweep gestures convenient for users, many computers support sweep gestures that begin in a border outside the active display area. According to an embodiment of the present invention an alternative gesture is provided for the same functions as sweeping from an edge of the primary display. This gesture is performed by placing a hand in the airspace beyond an edge of the primary display and moving the hand towards the edge. If the gesture is continued until the hand touches the primary display housing, the hand would touch the thickness of the display. I.e., the hand would touch the edge of the housing connecting the front of the display to the rear of the display. However, the hand need not reach the display; the detection of an object approaching the display from the side is recognized as the gesture.

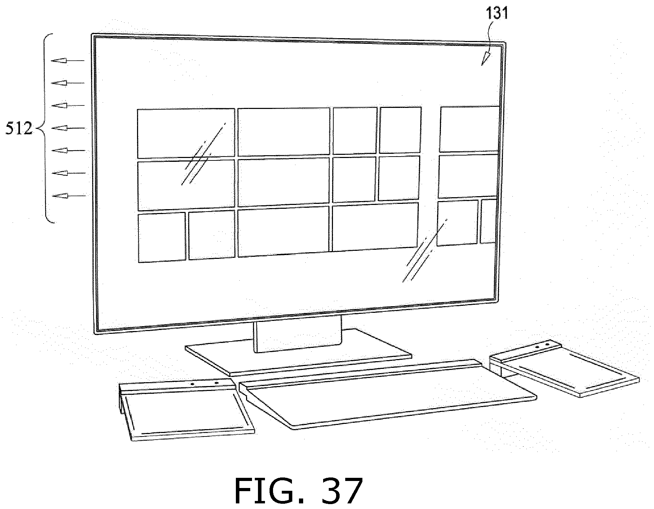

Reference is made to **FIG. 37,** which is a simplified illustration of a PC with proximity sensors for detecting wave gestures that approach a side edge of the display, in accordance with an embodiment of the present invention. **FIG. 37** shows PC display **131** having optical proximity sensor **512** arranged along the outer left edge of the display housing for detecting this approach gesture in the airspace beyond the edges of the display. In order to make these sweep gestures convenient for users, many prior art computers support sweep gestures that begin in a border outside the active display area. The approach gesture according to the present invention enables maximizing the active display area as no border area around the display is required for this gesture. The gesture according to the present invention also does not require touching the active display area and thereby avoids smudges on the display resulting from the prior art sweep gestures that draw a finger into the active display area.

**Recreational Applications for Optical Proximity Sensor**

One application for the present invention is interactive glasses such as GOOGLE® GLASS®. GOOGLE and GOOGLE GLASS are registered trademarks of Google Inc. of Mountain View, CA Interactive glasses include a head-up display in one or both glasses lenses. Interactive glasses are typically supported by pads on the bridge of the nose and by temple arms (sides) placed over the ears. In some interactive glasses the temple arms include touch sensors that enable user commands to be communicated by tap gestures or sliding gestures on the temple arms.

Thus, in some embodiments of the invention, the optical proximity sensor of the present invention is embedded in the temple arms of interactive glasses to enable user input gestures within a range of distances apart from the temple arms. This enables a 2D airspace opposite the temple arm for in-air user input gestures. Multiple rows of optical proximity sensors stacked along the temple arms provide a 3D sensor. In other embodiments, a first optical proximity sensor faces away from the user's temple and a second optical proximity sensor faces skyward, to detect gestures to the side of, and above, the user's head.

Another application is a sensor worn as a wristwatch. In various wrist-worn embodiments of the present invention, the optical proximity sensor is a one-dimensional row of diodes; a two dimensional grid of diodes; a two-dimensional snowflake pattern of diodes; two or more one-dimensional rows of diodes along two or more edges of the worn item. In one exemplary embodiment the optical proximity sensors are embedded in a wristwatch and project light beams upward through the watch face or its surrounding bezel. The user issues commands to the watch by performing hover gestures such as waving a hand over the watch. Alternatively, when the user rotates the wrist wearing the watch, he changes the amount of reflected light detected in the optical proximity sensor and this is translated into a command. For example, the optical proximity sensor communicates over BLUETOOTH® with the user's cell phone, and a rotation of the wrist is a command to answer an incoming call. A slower rotation gesture is a command to raise or lower the cell phone headset volume.

The optical proximity sensor also distinguishes between a finger gesture that returns localized reflections and a gesture made by a flat palm that returns reflections across a large portion of the optical proximity sensor. This enables responding to only one type of gesture (finger or palm).

Moreover, the optical proximity sensor of the present invention distinguishes between a flat palm above the sensor and a tilted palm above the sensor. When the palm is tilted over the optical proximity sensor, the reflections are not uniform - according to the various distances between portions of the tilted palm and the sensor. By contrast, a flat, even palm perpendicular to the sensor emitter beams reflects all of the sensor beams in the same way.

Another application is a bracelet with the detection plane aimed below the user's palm to detect curled fingers. The four fingers on a hand represent four bit positions and the user forms four-bit words by curling his fingers, where a curled finger is a bit value of '1' and a prone finger is a bit value of '0'. These four-bit values are detected by the optical proximity sensor and translated into commands.

An additional application uses two such bracelets, one on each wrist. The user creates 8-bit words by curling combinations of four fingers on each hand. This provides 256 unique combinations whereby a subset of these combinations is assigned to every letter of the alphabet. The user types text by curling his fingers to form the various 8-bit letter combinations. This provides an alternative method to input text without a keypad.

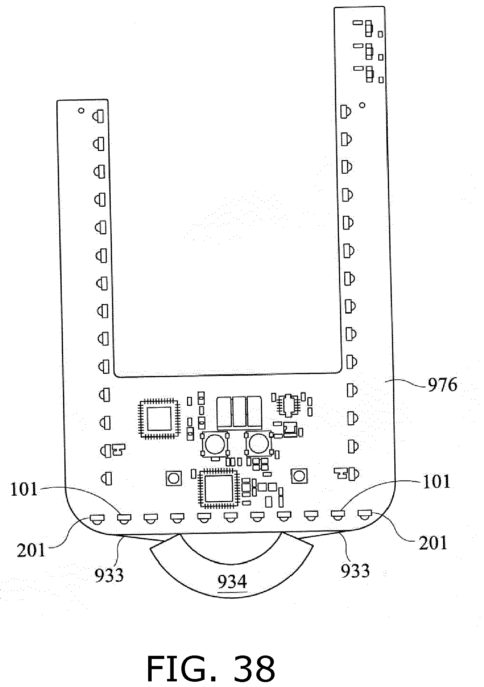

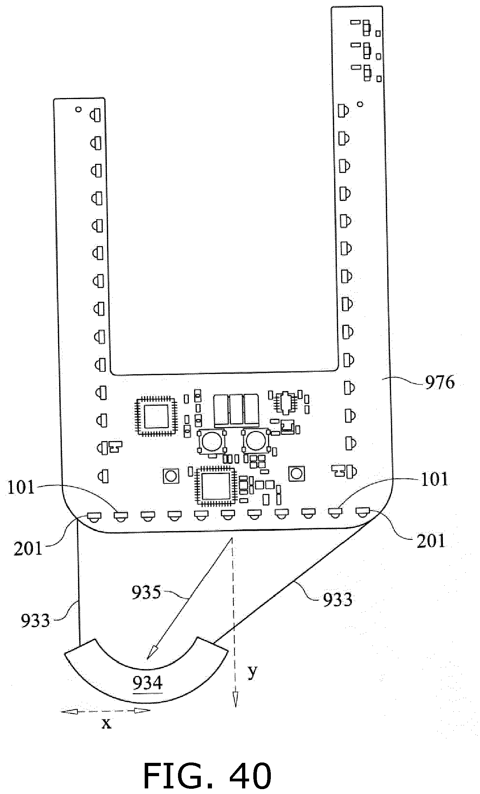

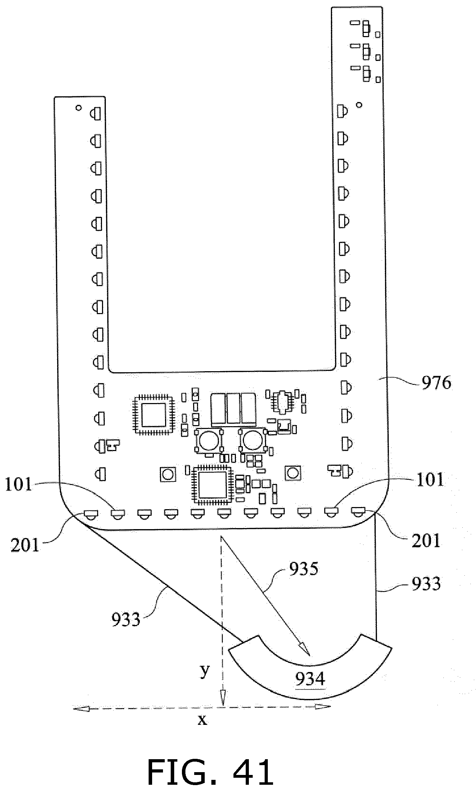

Another application is a protective casing for a mobile phone. This application is explained in detail in U.S. Patent Application No. 13/775,269, for REMOVABLE PROTECTIVE COVER WITH EMBEDDED PROXIMITY SENSORS. An application for a game accessory based on this protective casing is described with reference to **FIGS. 38** - **41.**

The accessory is a slingshot, which can be used in many games, inter alia, ANGRY BIRDS®, published by Rovio Entertainment Ltd., of Espoo, Finland, and owner of the ANGRY BIRDS trademark. In this video game, players catapult birds as projectiles using a slingshot or catapult. The player draws back the catapult to a desired extent to provide power for the projectile birds by sliding his or her finger along the screen. Lifting the finger from the screen releases the catapult, hurling the bird through the air at a target. The angle at which the catapult is drawn back determines the direction in which the bird is hurled. The degree to which the catapult is draw back determines the force of the projectile.

The present accessory enables the player to draw back an actual elastic slingshot attached to an edge of the phone casing. Reference is made to FIG. 36 in U.S. Patent Application No. 13/775,269 showing an example of a phone cover with embedded proximity sensors. **FIG. 34** in U.S. Patent Application No. 13/775,269 illustrates a phone in the cover of **FIG. 36. FIG. 37** in U.S. Patent Application No. 13/775,269 illustrates a layout of components on a PCB in the phone cover of **FIG. 36.**

Embodiments of the present invention incorporate optical proximity sensor **512,** described hereinabove, into a protective phone cover. Different embodiments will have the optical proximity sensor along 1 - 4 edges of the cover.

Reference is made to **FIGS. 38** - **41,** which are simplified illustrations of a game accessory in accordance with an embodiment of the present invention. Thus a PCB **976** is shown having an array of alternating emitters **101** and detectors **201** along a bottom edge of the casing. Attached to the two corners at the bottom edge of the casing are elastic bands **933** tied to slingshot pad **934.** This array of emitters and detectors identifies how the player draws back slingshot pad **934.**

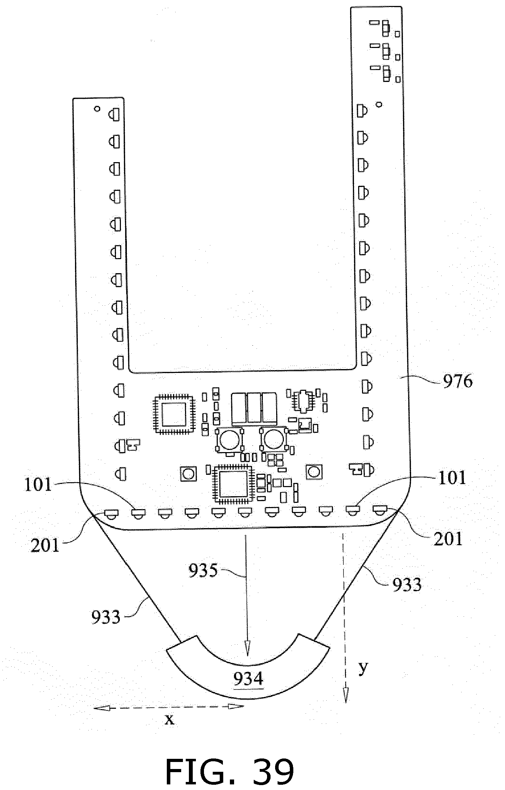

**FIGS. 39** - **41** show three different extensions **935** of slingshot pad **934.** In each figure, the x and y offsets detected by the one-dimensional array along the bottom edge are indicated by dashed arrows.

Several different methods are used to determine the extent and angle to which the slingshot is drawn back, e.g., as indicated by extension arrow **935** in **FIGS. 39** - **41.** In a first embodiment, elastic band **933** is substantially thinner than slingshot pad **934.** Therefore, the amount of light reflected by elastic band **933** is substantially less than what is reflected by slingshot pad **934** to enable the system to track the position of slingshot pad **934.** In a similar vein, even if slingshot pad **934** is not present, the two fingers with which a user pinches elastic band **933** in order to draw it back are much larger than the elastic band, and therefore, the user's two fingers can be tracked. In yet another embodiment the elastic band **933** is situated at a different height than the light beams projected by the proximity detector. Thus, the elastic band **933** is not by detected by the detector. However, the larger slingshot pad and/or the user's fingers drawing back the elastic band, extend through the plane of light beams projected by the detector and are therefore detected. In yet another embodiment, the detector is formed by two, stacked arrays of emitters, detectors and lenses. The combined height of the two arrays is greater than the width of elastic bands **933.** Therefore, elastic band **933** will not generate the same detection signals in both arrays. However, the combined height of the two arrays is less than the width of slingshot pad **934** and the user's two fingers and therefore these items generate similar detection signals in both arrays. In yet another embodiment, elastic band **933** does generate a significant detectable signal. In this case a signal pattern is generated across the entire detector array corresponding to the different distances between each section of the drawn-back elastic band and the detector array. The farthest distance is at the location of the slingshot pad or the user's fingers. Thus, by mapping the detection signals, a triangular shape will be mapped corresponding to the shape of the drawn-back slingshot.

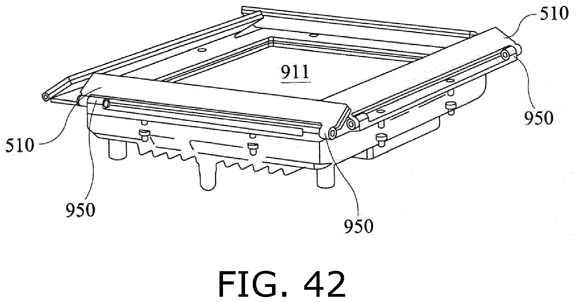

In another embodiment an optical proximity sensor **512** is attached via a hinge to an edge of a display. In some embodiments multiple optical proximity sensors **512** are attached to multiple edges of the display. Reference is made to **FIG. 42,** which is a simplified illustration of a display surrounded by four proximity sensor bars connected to the display by rotating hinges, in accordance with an embodiment of the present invention. **FIG. 42** shows display **911** surrounded on four sides by optical proximity sensors **512.** Each touch sensor bar is attached via hinges **950** to the display housing. As explained hereinabove, each optical proximity sensor **512** projects a 2D detection plane. Thus, hinges **950** enable aiming the 2D detection plane for each touch sensor bar **510** at an angle to display **911.** When rotated to aim the 2D detection plane at an angle above display **911,** touch sensor bar **510** provides hover detection. When rotated to aim the 2D detection plane parallel to the screen surface, optical proximity sensor **512** provides touch detection. Moreover, when one or more optical proximity sensor **512** is rotated to aim the 2D detection plane parallel to the screen surface, and a second one or more array is rotated to aim the 2D detection plane at an angle above the screen, both touch detection and hover detection are provided. In **FIG. 42,** all four optical proximity sensors **512** are rotated to aim their respective detection planes at respective angles above and across display **911.** The four intersecting detection planes in this case provide a 3D detection volume above screen **911.**

Another recreational application enables cloud gaming applications to be displayed on multiple handsets as a multi-panel display. A user arranges the handsets as tiles to form a large, rectangular multi-panel display. The game server identifies where each handset display is located within the multi-panel display. The game server streams respective portions of the game GUI to each handset such that the full screen game GUI is distributed across the handsets. In some embodiments, each handset in the multi-panel display has an optical proximity sensor **512** as described hereinabove.

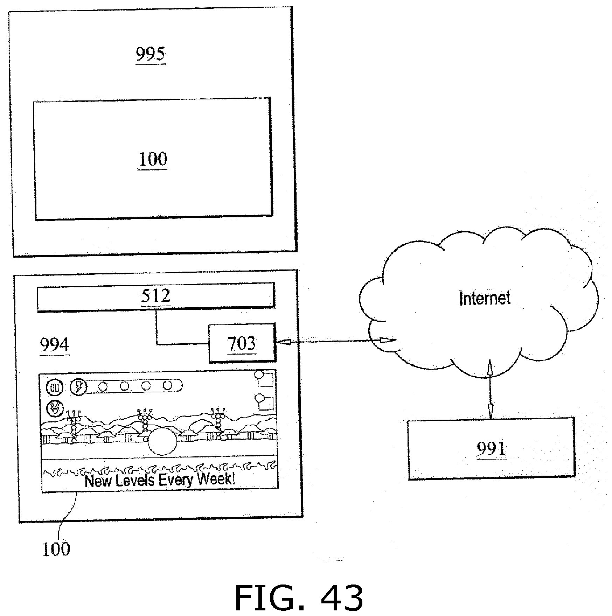

Reference is made to **FIG. 43,** which is a simplified illustration of a handheld electronic game device **994** having communicator **703** for communicating with internet game server **991,** in accordance with an embodiment of the present invention. Display **100** in device **994** renders a portion of a game user interface (UI) received by communicator **703** from game server **991.** Sensor **518** detects a second game device placed nearby and is connected to communicator **703** to send the detection information to the game server. In accordance with an embodiment of the present invention, sensor **518** may be similar to optical proximity sensor **512** discussed above.

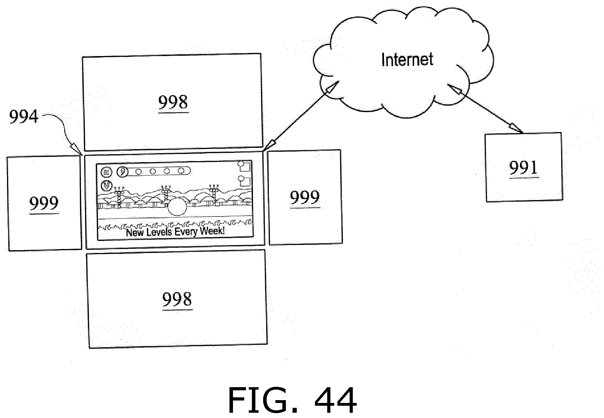

Reference is made to **FIG. 44,** which is a simplified illustration of an internet game rendered on a handset, in accordance with an embodiment of the present invention. **FIG. 44** shows an internet game server **991** in communication with handset **994.** The game logic is processed by server **991** which sends the game GUI to handset **994.** The game's GUI is rendered on a single screen. The area surrounding all four edges of handset **994** is used for user gestures to control the game, as described hereinabove. These gestures are detected by proximity sensors **512** along the edges of the handset, or along the edges of a protective cover used together with the handset, which form top and bottom detection zones **998** and left and right detection zones **999.**

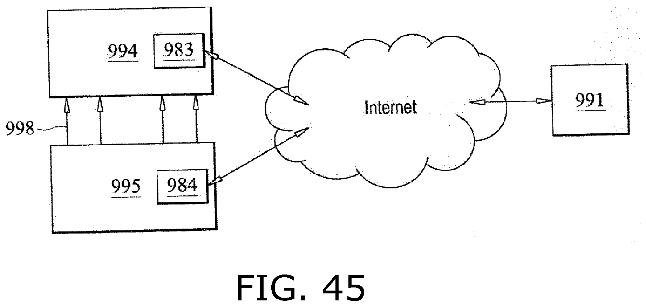

Reference is made to **FIG. 45,** which is a simplified illustration of two handsets being used together to render an internet game, in accordance with an embodiment of the present invention. **FIG. 45** shows an internet game server **991** in communication with two handsets **994** and **995,** via respective communication processors **983** and **984.** The two handsets are aligned along a common edge, namely the long lower edge of handset **994** is aligned with the long upper edge of handset **995.** As such, these edges between the two handsets are not usable for detecting gestures outside the handsets. However, these edges detect each other. For example, detection zone **998** along the upper edge of handset **995** detects handset **994.** Thus, handset **995** communicates to server **991** that the entire long upper edge above **995** is occupied by a proximal object. Similarly, handset **994** communicates to server **991** that the entire long bottom edge of handset **994** is occupied by a proximal object. Based on this information, server **991** determines that the proximal object detected by each handset is the neighboring handset. Accordingly, server **991** sends the upper half of the game GUI to handset **994** and the lower half of the game GUI to handset 995. Furthermore, based on the screen orientation, e.g., the location of the detecting edge in relation to pixel (0,0) on the detecting handset's display, server **991** determines whether to rotate one or both of the half-GUI images in order that they will be rendered properly on their target handsets. This ensures continuity from one handset display to the next, so that together the two handsets display a contiguous GUI.

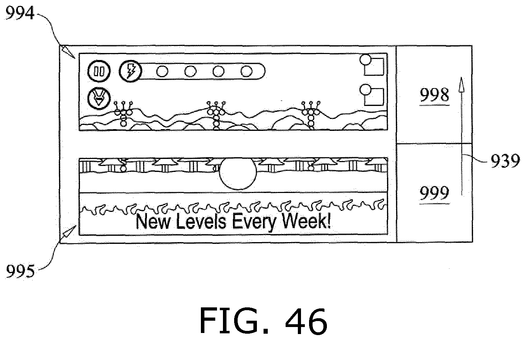

Reference is made to **FIG. 46,** which is a simplified illustration of a two-panel display for an internet game, the display being made up of two handsets, in accordance with an embodiment of the present invention. **FIG. 46** shows an internet game rendered on two handsets **994** and **995,** i.e., the game GUI is rendered on two screens: the upper half of the GUI is rendered on handset **994,** and the lower half of the GUI is rendered on handset 995. Because the number of devices communicating with the internet game server in this instance of the current game is two, the game server divides the GUI into two portions. The number of portions the game server divides the GUI into, is according to the number of devices communicating with the internet game server in a particular instance the game.

As explained above with reference to **FIG. 45,** the edges between the two handsets are not usable for detecting gestures outside the handsets. However, the remaining three exposed edges of each handset are usable for detecting user input gestures in the open space outside the handsets. The exposed handset edges form the periphery of the multi-panel display and are used for detecting user gestures in the open space outside the multi-panel display. The handset alignment information described above, whereby server **991** determines how the two handsets are oriented in relation to each other and what part of the GUI is rendered on each handset, also enables the game server to map a gesture that spans the open space of two handsets as a single gesture. For example, if the user performs a glide gesture by gliding his finger upwards opposite the right edge of the multi-panel display, as illustrated by arrow **939,** the gesture is first detected at zone **999** of handset **995** and then at zone **998** of handset **994.** Each handset sends its proximity zone detection information to server **991.** Server **991** stores information relating to the arrangement of the panels. Based on the handset alignment information, server **991** combines these two glide detections to form one long upward glide gesture opposite the right edge of the multi-panel display.

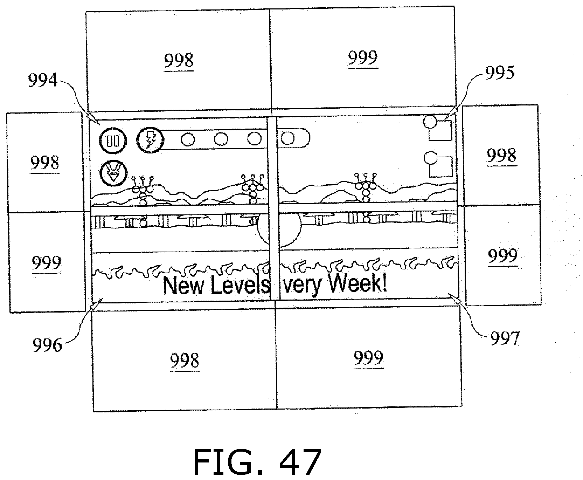

Reference is made to **FIG. 47,** which is a simplified illustration of a four-panel display for an internet game, the display being made up of four handsets, in accordance with an embodiment of the present invention. **FIG. 47** shows an internet game on four handsets **994 - 997.** The game GUI is rendered on four screens, each screen displaying a respective quarter of the GUI. As explained hereinabove, each of the edges between neighboring handsets detects a neighboring handset. Thus in a four-handset arrangement each handset detects two neighbors. By sending this information to the server, the server maps how the four handsets are arranged and sends an appropriate quarter of the GUI to each handset so that the four handsets together display a contiguous GUI. As mentioned, it may be necessary that the server rotate some of the images sent to the different handsets.

In some embodiments, the detector along each device edge is an alternating series of light emitters and light detectors, whereby the detectors detect light reflected by an object, such as a neighboring device. However, in some embodiments, an activation pattern of light emitters along a device edge is detected by the opposite array of detectors on its neighboring device. This is an alternative method for detecting a neighboring active device. It also enables determining the relative orientation of the two devices. For example, if the emitters near the top of the display are activated in an activation pattern different than those activated near the bottom of the display, the neighboring device determines where the top of the neighboring device is situated based on the different detections at its light detectors.

As explained hereinabove, the remaining exposed handset edges form the periphery of the multi-panel display and are used for detecting user gestures in the open space outside the multi-panel display. The alignment information described above, based on the handset edges situated between handsets, also enables the game server to map a gesture that spans the open space opposite two handsets, indicated as zones **998** and **999** in **FIG. 47,** as a single gesture.

In some embodiments each device includes a dedicated emitter and sensor that employ an automated process of negotiation that dynamically sets up a communications channel between the two devices. In information technology, telecommunications, and related fields, this process is known as handshaking. Thus, for example, a first device's emitter generates a handshake signal that is detected at the sensor on the neighboring device. The neighboring device emitter generates a reciprocal handshake signal that is detected at the first device's sensor. Light emitters and light sensors are capable of handshaking. However, other types of emitter/sensor are also within the scope of the invention, inter alia, RFID. Thus, regardless of the technology used: (a) the neighboring devices detect each other; (b) each device communicate this detection to the internet game server; and (c) based on this information, the internet game server sends respective portions of the game GUI to each device.

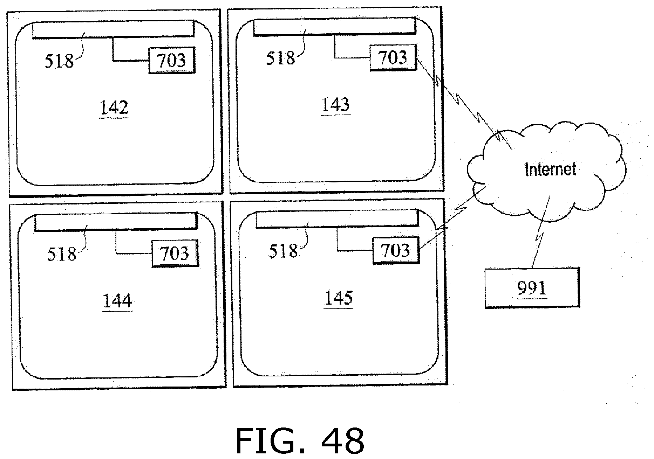

Reference is made to **FIG. 48,** which is a simplified illustration of a configuration of four game devices, as shown in **FIG. 47,** whereby the game GUI is distributed among the four displays **142** - **145** according to each display's relative position and orientation detected by sensors **518** and communicated to game server **991,** in accordance with an embodiment of the present invention. Thus, **FIG. 48** illustrates an internet gaming system featuring internet game server **991** and a number of game devices, each of which is a handheld electronic game device in communication with the game server via individual communicators **703** embedded in each device. Each device has a respective display **142** - **145** for rendering a respective portion of a game user interface (UI) received by communicator **703** from game server **991.** Each device also has a respective sensor **518,** connected to communicator **703,** for detecting presence of a neighboring game device. Game server **991** determines the size of each respective portion of the game UI based on the number of game devices.

In the foregoing specification, the invention has been described with reference to specific exemplary embodiments thereof. Accordingly, the specification and drawings are to be regarded in an illustrative rather than a restrictive sense.

## Claims

1. A proximity sensor for determining two-dimensional coordinates of a proximal object, comprising:

    a housing (601, 602);
    a one-dimensional array of alternating light emitters and detectors mounted in said housing, comprising:

        a plurality of light pulse emitters (101 - 103, 111) for projecting light (336, 401, 403 - 405, 410, 420) out of said housing along a detection plane (912, 921, 922); and
        a plurality of primary light detectors (201 - 208, 210 - 215) for detecting reflections (402, 406 - 409, 411 - 413, 421) of the light projected by said emitters, by a reflective object in the detection plane (901, 910);

    a plurality of primary lenses (302, 303, 311, 312) mounted and oriented in said housing relative to said emitters and said primary detectors in such a manner that the primary light detectors receive maximum intensity when light enters a corresponding primary lens at a first particular angle (915), enabling the determination of a location in the two-dimensional detection plane corresponding to each emitter-detector pair, whereby for each emitter-detector pair, light emitted by the emitter of that pair passes through one of the primary lenses and is reflected by the object back through one of the primary lenses to the detector of that pair when the object is located at a two-dimensional position (902 - 906, 908), from among a primary set of positions in the detection plane, that position being associated with that emitter-detector pair; and
    a processor (701, 702) connected to said emitters and to said primary detectors, for synchronously co-activating emitter-detector pairs, and configured to calculate a two-dimensional location of the object in the detection plane by:

        determining an emitter-detector pair among the co-activated emitter-detector pairs, for which the detector detects a maximum amount of light, and identifying the position associated therewith,

determining additional positions that are associated with co-activated emitter-detector pairs and that neighbor the thus-identified position, and

calculating a weighted average of the thus-identified position and the thus-determined additional positions, wherein each position's weight in the average corresponds to a degree of detection of the reflected light beam for the emitter-detector pair to which that position is associated.

2. The proximity sensor of claim 1, wherein said processor is configured to calculate the location of the object in the detection plane using the Hough transform by:

providing a plurality of candidate ellipses (955 - 958) within the detection plane,

determining co-activated emitter-detector pairs for which the detector generates a detection signal, and identifying the positions associated therewith,

interpolating the detection signals for any two of the co-activated emitter-detector pairs whose two associated positions are neighbors, to determine an intermediate location (952 - 954) between those two associated positions,

assigning an orientation to each intermediate location, the orientation being perpendicular to the line connecting the two neighboring associated positions,

for each candidate ellipse:

assigning a match value to the candidate ellipse, the match value representing a degree of match between an edge of the candidate ellipse and the location and orientation of an intermediate location, and

calculating a sum of the thus-assigned match values, and

designating that candidate ellipse with the maximum thus-calculated sum as being the location of the object in the detection plane.

3. The proximity sensor of claim **1,** wherein said processor further infers that the object is moving in a direction parallel to an optical axis of one of said primary lenses when the emitter of the thus-determined emitter-detector pair continues to be the same emitter over a time series of object location calculations, and the amount of light detected by the detector of that pair has the same ratio to the amount of light detected by the detector of a co-activated pair, with which one of the additional positions is associated, over the time series of calculations.

4. The proximity sensor of claim **1,** wherein said lenses are oriented so that for each emitter-detector pair, when the object is located at the associated position in the detection plane, the light emitted by the emitter of the pair is reflected by the object back to the detector at an angle $\theta$ or $-\theta$ with respect to an optical axis of one of said primary lenses, and wherein said processor further infers that the object is moving in a direction parallel to that angle $\theta$ or $-\theta$ with respect to the optical axis when the detector of the thus-determined emitter-detector pair continues to be the same detector over a time series of object location calculations, and the amount of light detected by the detector of that pair has the same ratio to the amount of light detected by the detector of a co-activated pair, with which one of the additional positions is associated, over the time series of calculations.

5. The proximity sensor of claim **1,** wherein the co-activated emitter-detector pairs include:

at least one emitter-detector pair for which the emitter is the same emitter as in the thus-determined emitter-detector pair, and

at least one emitter-detector pair for which the detector is the same detector as in the thus-determined emitter-detector pair.

6. The proximity sensor of claim 1, further comprising a plurality of secondary light detectors (202) mounted in said housing for detecting reflections of the projected light by a reflective object in the detection plane, such that the secondary light detectors receive maximum intensity when light enters a corresponding primary lens at a second particular angle, different than the first particular angle, whereby for each emitter-detector pair of an emitter with a secondary detector, light emitted by the emitter of the pair passes through one of said primary lenses and is reflected by the object back through one of said primary lenses to the detector of the pair when the object is located at a two-dimensional position, from among a secondary set of positions in the detection plane, the secondary set of positions being different than the primary set of positions.

7. The proximity sensor of claim 6 wherein neighboring ones of the secondary set of positions are closer together than neighboring ones of the primary set of positions.

8. The proximity sensor of claim 1, further comprising:

a plurality of secondary light detectors (202) mounted in said housing for detecting reflections of the projected light by a reflective object in the detection plane; and
a plurality of secondary lenses mounted and oriented in said housing relative to said secondary detectors in such a manner that the secondary light detectors receive maximum intensity when light enters a corresponding secondary lens at a second particular angle, different than the first particular angle, whereby for each emitter-detector pair of an emitter with a secondary detector, light emitted by the emitter of that pair passes through one of said primary lenses and is reflected by the object through one of the secondary lenses back to the detector of that pair when the object is located at a two-dimensional position, from among a secondary set of positions in the detection plane, the secondary set of positions being different than the primary set of positions.

9. The proximity sensor of claim 8 wherein neighboring ones of the secondary set of positions are closer together than neighboring ones of the primary set of positions.

10. The proximity sensor of claim **1,** wherein the detection plane passes over a reflective surface (911), and wherein said primary lenses direct the light beams (410) projected by said emitters at an upward angle relative to said reflective surface, to minimize reflections of the projected light by the surface.

11. The proximity sensor of claim **1,** wherein said emitters and primary detectors comprise diodes that are mounted in said housing without individual plastic casing lenses and without individual substrates.

12. A plurality of proximity sensors for determining three-dimensional coordinates of a proximal object, comprising a plurality of the proximity sensors (510) of claim **1** directed toward respective, intersecting detection planes.

13. The plurality of proximity sensors of claim **12,** wherein each proximity sensor is aimed in a direction substantially perpendicular to the direction in which another of the proximity sensors is aimed.


**Patentansprüche**

1. Näherungssensor zum Bestimmen zweidimensionaler Koordinaten eines sich nahen Objekts, Folgendes umfassend:

ein Gehäuse (601, 602),
eine eindimensionale Anordnung sich abwechselnder Lichtemitter und Detektoren, die in dem Gehäuse montiert sind, Folgendes umfassend:

mehrere Lichtimpulsemitter (101-103, 111), um Licht (336, 401, 403-405, 410, 420) aus dem Gehäuse entlang einer Erkennungsebene (912, 921, 922) zu projizieren, und
mehrere primäre Lichtdetektoren (201-208, 210-215), um Reflexionen (402, 406-409, 411-413, 421) des von den Emittern projizierten Lichts durch ein reflektierendes Objekt in der Erkennungsebene (901, 910) zu erkennen,

mehrere primäre Linsen (302, 303, 311, 312), die im Verhältnis zu den Emittern und den primären Detektoren derart in dem Gehäuse montiert und ausgerichtet sind, dass die primären Lichtdetektoren die maximale Intensität empfangen, wenn Licht in einem ersten bestimmten Winkel (915) in eine entsprechende primäre Linse eintritt, wobei bei jedem Emitter-Detektor-Paar Licht, das von dem Emitter des Paares emittiert wird, durch eine der primären Linsen gelangt und durch das Objekt durch eine der primären Linsen hindurch zurück zum Detektor des Paares reflektiert wird, wenn sich das Objekt an einer zweidimensionalen Position (902-906, 908) aus einer primären Gruppe von Positionen in der Erkennungsebene befindet, wobei die Position diesem Emitter-Detektor-Paar zugeordnet ist, und
einen Prozessor (701, 702), der mit den Emittern und den primären Detektoren verbunden ist, um die Emitter-Detektor-Paare synchron gemeinsam zu aktivieren, und der dafür konfiguriert ist, durch Folgendes einen zweidimensionalen Standort des Objekts in der Erkennungsebene zu berechnen:

Bestimmen eines Emitter-Detektor-Paares unter den gemeinsam aktivierten Emitter-Detektor-Paaren, für das der Detektor eine maximale Lichtmenge erkennt, und Identifizieren der diesem zugeordneten Position,

Bestimmen zusätzlicher Positionen, die den gemeinsam aktivierten Emitter-Detektor-Paaren zugeordnet und der so identifizierten Position benachbart sind, und

Berechnen eines gewichteten Mittelwerts der so identifizierten Position und der so bestimmten zusätzlichen Positionen, wobei die Gewichtung jeder Position in dem Mittelwert einem Grad der Erkennung des reflektierten Lichtstrahls für das Emitter-Detektor-Paar entspricht, dem die Position zugeordnet ist.

2. Näherungssensor nach Anspruch 1, wobei der Prozessor dafür konfiguriert ist, durch Folgendes den Standort des Objekts in der Erkennungsebene mit Hilfe der Hough-Transformation zu berechnen:

Bereitstellen mehrerer Kandidatenellipsen (955-958) in der Erkennungsebene,

Bestimmen gemeinsam aktivierter Emitter-Detektor-Paare, für die der Detektor ein Erkennungssignal erzeugt, und Identifizieren der diesen zugeordneten Positionen,

Interpolieren der Erkennungssignale für beliebige zwei der miteinander aktivierten Emitter-Detektor-Paare, deren zwei zugordnete Positionen benachbart sind, um einen Zwischenstandort (952-954) zwischen diesen zwei zugeordneten Position zu bestimmen,

Zuweisen einer Ausrichtung zu jedem Zwischenstandort, wobei die Ausrichtung senkrecht zu der Linie liegt, welche die zwei benachbarten zugeordneten Positionen verbindet,

für jede Kandidatenellipse:

Zuweisen eines Übereinstimmungswertes zur Kandidatenellipse, wobei der Übereinstimmungswert einen Grad der Übereinstimmung zwischen einem Rand der Kandidatenellipse und dem Standort und der Ausrichtung eines Mittelstandorts darstellt, und

Berechnen einer Summe der so zugewiesenen Übereinstimmungswerte und

Kennzeichnen dieser Kandidatenellipse mit dem Maximalwert der so berechneten Summe als den Standort des Objekts in der Erkennungsebene.

3. Näherungssensor nach Anspruch 1, wobei der Prozessor ferner ableitet, dass sich das Objekt in eine Richtung parallel zu einer optischen Achse einer der primären Linsen bewegt, wenn der Emitter des so bestimmten Emitter-Detektor-Paares über eine Zeitreihe von Objektstandortberechnungen derselbe Emitter bleibt und die Lichtmenge, die durch den Detektor dieses Paares erkannt wird, das gleiche Verhältnis zur Lichtmenge aufweist, die durch den Detektor eines gemeinsam aktivierten Paares erkannt wird, dem über die Zeitreihe von Berechnungen eine der zusätzlichen Positionen zugeordnet ist.

4. Näherungssensor nach Anspruch 1, wobei die Linsen derart angeordnet sind, dass, wenn sich das Objekt in der zugeordneten Position in der Erkennungsebene befindet, für jedes Emitter-Detektor-Paar das durch den Emitter des Paares emittierte Licht durch das Objekt in einem Winkel $\theta$ oder $-\theta$ im Verhältnis zu einer optischen Achse einer der primären Linsen zurück zum Detektor reflektiert wird und wobei der Prozessor ferner ableitet, dass sich das Objekt in eine Richtung parallel zu diesem Winkel $\theta$ oder $-\theta$ im Verhältnis zur optischen Achse bewegt, wenn der Detektor des so bestimmten Emitter-Detektor-Paares über eine Zeitreihe von Objektstandortberechnungen derselbe Detektor bleibt und die Lichtmenge, die durch den Detektor dieses Paares erkannt wird, das gleiche Verhältnis zur Lichtmenge aufweist, die durch den Detektor eines gemeinsam aktivierten Paares erkannt wird, dem über die Zeitreihe von Berechnungen eine der zusätzlichen Positionen zugeordnet ist.

5. Näherungssensor nach Anspruch 1, wobei die gemeinsam aktivierten Emitter-Detektor-Paare Folgendes beinhalten:

mindestens ein Emitter-Detektor-Paar, bei dem der Emitter derselbe Emitter wie in dem so bestimmten Emitter-Detektor-Paar ist, und

mindestens ein Emitter-Detektor-Paar, bei dem der Detektor derselbe Detektor wie in dem so bestimmten Emitter-Detektor-Paar ist.

6. Näherungssensor nach Anspruch 1, ferner mehrere sekundäre Lichtdetektoren (202) umfassend, die in dem Gehäuse montiert sind, um Reflexionen des projizierten Lichts durch ein reflektierendes Objekt in der Erkennungsebene derart zu erkennen, dass die sekundären Lichtdetektoren die maximale Intensität empfangen, wenn Licht in einem zweiten bestimmten Winkel, der sich vom ersten bestimmten Winkel unterscheidet, in eine entsprechende primäre Linse eintritt, wobei bei jedem Emitter-Detektor-Paar eines Emitters mit einem sekundären Detektor Licht, das durch den Emitter des Paares emittiert wird, durch eine der primären Linsen gelangt und durch das Objekt durch eine der primären Linsen hindurch zurück zum Detektor des Paares reflektiert wird, wenn sich das Objekt an einer zweidimensionalen Position aus einer sekundären Gruppe von Positionen in der Erkennungsebene befindet, wobei sich die sekundäre Gruppe von Positionen von der primären Gruppe von Positionen unterscheidet.

7. Näherungssensor nach Anspruch 6, wobei benachbarte Positionen der sekundären Gruppe von Positionen näher beieinander liegen als benachbarte Positionen der primären Gruppe von Positionen.

8. Näherungssensor nach Anspruch 1, ferner Folgendes umfassend:

mehrere sekundäre Lichtdetektoren (202), die in dem Gehäuse montiert sind, um Reflexionen des projizierten Lichts durch ein reflektierendes Objekt in der Erkennungsebene zu erkennen, und
mehrere sekundäre Linsen, die im Verhältnis zu den sekundären Detektoren derart in dem Gehäuse montiert und ausgerichtet sind, dass die sekundären Lichtdetektoren die maximale Intensität empfangen, wenn Licht in einem zweiten bestimmten Winkel, der sich vom ersten bestimmten Winkel unterscheidet, in eine entsprechende sekundäre Linse eintritt, wobei bei jedem Emitter-Detektor-Paar eines Emitters mit einem sekundären Detektor Licht, das von dem Emitter dieses Paares emittiert wird, durch eine der primären Linsen gelangt und durch das Objekt durch eine der sekundären Linsen hindurch zurück zum Detektor dieses Paares reflektiert wird, wenn sich das Objekt an einer zweidimensionalen Position aus einer sekundären Gruppe von Positionen in der Erkennungsebene befindet, wobei sich die sekundäre Gruppe von Positionen von der primären Gruppe von Positionen unterscheidet.

9. Näherungssensor nach Anspruch 8, wobei benachbarte Positionen der sekundären Gruppe von Positionen näher beieinander liegen als benachbarte Positionen der primären Gruppe von Positionen.

10. Näherungssensor nach Anspruch 1, wobei die Erkennungsebene über einer reflektierenden Fläche (911) verläuft und wobei die primären Linsen die Lichtstrahlen (410), die durch die Emitter projiziert werden, in einem Winkel im Verhältnis zur reflektierenden Fläche aufwärts lenken, um Reflexionen des projizierten Lichts durch die Fläche zu minimieren.

11. Näherungssensor nach Anspruch 1, wobei die Emitter und die primären Detektoren Dioden umfassen, die ohne einzelne Kunststoffummantelungslinsen und ohne einzelne Substrate in dem Gehäuse montiert sind.

12. Mehrere Näherungssensoren zum Bestimmen von dreidimensionalen Koordinaten eines nahen Objekts, mehrere der Näherungssensoren (510) nach Anspruch 1 umfassend, die hin zu entsprechenden, sich schneidenden Erkennungsebenen gerichtet sind.

13. Mehrere Näherungssensoren nach Anspruch 12, wobei jeder Näherungssensor in eine Richtung zielt, die im Wesentlichen senkrecht zu der Richtung liegt, in die ein anderer der Näherungssensoren zielt.

**Revendications**

1. Capteur de proximité pour déterminer les coordonnées tridimensionnelles d'un objet proximal, comprenant :

un logement (601, 602) ;
un réseau unidimensionnel d'émetteurs et de détecteurs de lumière alternés montés dans ledit logement, comprenant :

une pluralité d'émetteurs d'impulsions de lumière (101 à 103, 111) pour projeter la lumière (336, 401, 403 à 405, 410, 420) hors dudit logement le long d'un plan de détection (912, 921, 922) ; et
une pluralité de détecteurs de lumière principaux (201 à 208, 210 à 215) pour détecter les réflexions (402, 406 à 409, 411 à 413, 421) de la lumière projetée par lesdits émetteurs, par un objet réfléchissant dans le plan de détection (901, 910) ;

une pluralité de lentilles principales (302, 303, 311, 312) montées et orientées dans ledit logement par rapport auxdits émetteurs et auxdits détecteurs principaux d'une manière telle que les détecteurs de lumière principaux reçoivent une intensité maximum lorsque la lumière entre dans une lentille principale correspondante selon un premier angle particulier (915), moyennant quoi, pour chaque paire d'émetteur-détecteur, la lumière émise par l'émetteur de cette paire passe à travers l'une des lentilles principale et est réfléchie par l'objet de retour à travers l'une des lentilles principales vers le détecteur de cette paire lorsque l'objet est situé à une position bidimensionnelle (902 à 906, 908), parmi un ensemble principal de positions dans le plan de détection, cette position étant associée à cette paire d'émetteur-détecteur ; et

un processeur (701, 702) connecté auxdits émetteurs et auxdits détecteurs principaux, pour activer conjointement de manière synchrone des paires d'émetteur-détecteur, et configuré pour calculer un emplacement bidimensionnel de l'objet dans le plan de détection par :

la détermination d'une paire d'émetteur-détecteur parmi les paires d'émetteur-détecteur activées conjointement, pour laquelle le détecteur détecte une quantité maximum de lumière, et l'identification de la position associée à celle-ci,

la détermination de positions supplémentaires qui sont associées à des paires d'émetteur-détecteur activées conjointement et qui sont voisines de la position ainsi identifiée, et

le calcul d'une moyenne pondérée de la position ainsi identifiée et des positions supplémentaires ainsi déterminées, dans lequel le poids de chaque position dans la moyenne correspond à un degré de détection du faisceau de lumière réfléchi pour la paire d'émetteur-détecteur à laquelle cette position est associée.

**2.** Capteur de proximité selon la revendication 1, dans lequel ledit processeur est configuré pour calculer l'emplacement de l'objet dans le plan de détection en utilisant la transformation d'Hough en :

fournissant une pluralité d'ellipses candidates (955 à 958) dans le plan de détection,

déterminant les paires d'émetteur-détecteur activées conjointement pour lesquelles le détecteur génère un signal de détection, et identifiant les positions associées à celles-ci,

interpolant les signaux de détection pour deux paires quelconques des paires d'émetteur-détecteur activées conjointement dont les deux positions associées sont voisines, pour déterminer un emplacement intermédiaire (952 à 954) entre ces deux positions associées,

attribuant une orientation à chaque emplacement intermédiaire, l'orientation étant perpendiculaire à la droite reliant les deux positions associées voisines,

pour chaque ellipse candidate :

attribuant une valeur de correspondance à l'ellipse candidate, la valeur de correspondance représentant un degré de correspondance entre un bord de l'ellipse candidate et l'emplacement et l'orientation d'un emplacement intermédiaire, et

calculant une somme des valeurs de correspondance ainsi attribuées, et

désignant cette ellipse candidate avec la somme ainsi calculée maximum comme étant l'emplacement de l'objet dans le plan de détection.

**3.** Capteur de proximité selon la revendication 1, dans lequel ledit processeur déduit en outre que l'objet se déplace dans une direction parallèle à un axe optique de l'une desdites lentilles principales lorsque l'émetteur de la paire d'émetteur-détecteur ainsi déterminée continue d'être le même émetteur sur une série temporelle de calculs d'emplacement d'objet, et que la quantité de lumière détectée par le détecteur de cette paire a le même rapport par rapport à la quantité de lumière détectée par le détecteur d'une paire activée conjointement, à laquelle l'une des positions supplémentaires est associée, sur la série temporelle de calculs.

**4.** Capteur de proximité selon la revendication 1, dans lequel lesdites lentilles sont orientées de sorte que, pour chaque paire d'émetteur-détecteur, lorsque l'objet est situé à la position associée dans le plan de détection, la lumière émise par l'émetteur de la paire soit réfléchie par l'objet de retour vers le détecteur selon un angle θ ou -θ par rapport à un axe optique de l'une desdites lentilles principales, et dans lequel ledit processeur déduit en outre que l'objet se déplace dans une direction parallèle à cet angle θ ou -θ par rapport à l'axe optique lorsque le détecteur de la paire d'émetteur-détecteur ainsi déterminée continue d'être le même détecteur sur une série temporelle de calculs d'emplacement d'objet, et que la quantité de lumière détectée par le détecteur de cette paire a le même rapport par rapport à la quantité de lumière détectée par le détecteur d'une paire activée conjointement, à laquelle l'une des positions supplémentaires est associée, sur la série temporelle de calculs.

**5.** Capteur de proximité selon la revendication 1, dans lequel les paires d'émetteur-détecteur activées conjointement comprennent :

au moins une paire d'émetteur-détecteur pour laquelle l'émetteur est le même émetteur que dans la paire d'émetteur-détecteur ainsi déterminée, et

au moins une paire d'émetteur-détecteur pour laquelle le détecteur est le même détecteur que dans la paire d'émetteur-détecteur ainsi déterminée.

6. Capteur de proximité selon la revendication 1, comprenant en outre une pluralité de détecteurs de lumière secondaires (202) montés dans ledit logement pour détecter les réflexions de la lumière projetée par un objet réfléchissant dans le plan de détection, de sorte que les détecteurs de lumière secondaires reçoivent une intensité maximum lorsque la lumière entre dans une lentille principale correspondante selon un deuxième angle particulier, différent du premier angle particulier, moyennant quoi, pour chaque paire d'émetteur-détecteur d'un émetteur avec un détecteur secondaire, la lumière émise par l'émetteur de la paire passe à travers l'une desdites lentilles principales et est réfléchie par l'objet de retour à travers l'une desdites lentilles principales vers le détecteur de la paire lorsque l'objet est situé à une position bidimensionnelle, parmi un ensemble secondaire de positions dans le plan de détection, l'ensemble secondaire de positions étant différent de l'ensemble principal de positions.

7. Capteur de proximité selon la revendication 6, dans lequel les positions voisines de l'ensemble secondaire de positions sont plus proches les unes des autres que les positions voisines de l'ensemble principal de positions.

8. Capteur de proximité selon la revendication 1, comprenant en outre :

une pluralité de détecteurs de lumière secondaires (202) montés dans ledit logement pour détecter les réflexions de la lumière projetée par un objet réfléchissant dans le plan de détection ; et

une pluralité de lentilles secondaires montées et orientées dans ledit logement par rapport auxdits détecteurs secondaires d'une manière telle que les détecteurs de lumière secondaires reçoivent une intensité maximum lorsque la lumière entre dans une lentille secondaire correspondante selon un deuxième angle particulier, différent du premier angle particulier, moyennant quoi, pour chaque paire d'émetteur-détecteur d'un émetteur avec un détecteur secondaire, la lumière émise par l'émetteur de cette paire passe à travers l'une desdites lentilles principales et est réfléchie par l'objet à travers l'une des lentilles secondaires de retour vers le détecteur de cette paire lorsque l'objet est situé à une position bidimensionnelle, parmi un ensemble secondaire de positions dans le plan de détection, l'ensemble secondaire de positions étant différent de l'ensemble principal de positions.

9. Capteur de proximité selon la revendication 8, dans lequel les positions voisines de l'ensemble secondaire de positions sont plus proches les unes des autres que les positions voisines de l'ensemble principal de positions.

10. Capteur de proximité selon la revendication 1, dans lequel le plan de détection passe sur une surface réfléchissante (911), et dans lequel lesdites lentilles principales dirigent les faisceaux de lumière (410) projetés par lesdits émetteurs selon un angle vers le haut par rapport à ladite surface réfléchissante, pour réduire à un minimum les réflexions de la lumière projetée par la surface.

11. Capteur de proximité selon la revendication 1, dans lequel lesdits émetteurs et détecteurs principaux comprennent des diodes qui sont montées dans ledit logement sans lentilles de boîtier en matière plastique individuelles et sans substrats individuels.

12. Pluralité de capteurs de proximité pour déterminer les coordonnées tridimensionnelles d'un objet proximal, comprenant une pluralité des capteurs de proximité (510) selon la revendication 1 dirigés vers des plans de détection se croisant respectifs.

13. Pluralité de capteurs de proximité selon la revendication 12, dans laquelle chaque capteur de proximité est dirigé dans une direction sensiblement perpendiculaire à la direction dans laquelle un autre des capteurs de proximité est dirigé.

130

100

240

130

240

FIG. 1
(PRIOR ART)

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

919

FIG. 22

FIG. 23

FIG. 24

FIG. 25

(1)nLED=13,Pitch=7 mm, θ=20', δy=20mm, hspots=91, bspots=0

(a)

(4)nLED=13,Pitch=7 mm, θ=50', δy=6mm, hspots=133, bspots=140

(a)

FIG. 26

FIG. 27

FIG. 28

FIG. 29

FIG. 30

131

134

133

134

# FIG. 31

514

515

133

513

516

FIG. 32

FIG. 33

FIG. 34

FIG. 35

FIG. 36

FIG. 37

EP 3 005 047 B1

FIG. 38

63

FIG. 39

976

101

201

935

933

933

101

201

933

934

y

x

FIG. 40

FIG. 41

FIG. 42

FIG. 43

**FIG. 44**

FIG. 45

FIG. 46

FIG. 47

FIG. 48

**REFERENCES CITED IN THE DESCRIPTION**

**Patent documents cited in the description**

- US 61828713 B
- US 61838296 A
- US 61846089 A
- US 61929992 A
- US 61972435 A
- US 61986341 B
- US 14063513 A

- US 2010238139 A1
- US 2011169781 A1
- US 2008278460 A1
- US 2012327029 A1
- US 2011248960 A1
- WO 2007029257 A2
- US 775269 A